# EUROPÄISCHE PATENTSCHRIFT

(11) **EP 2 615 073 B1**
(45) Veröffentlichungstag und Bekanntmachung des Hinweises auf die Patenterteilung: **04.04.2018**
(21) Anmeldenummer: 12151130.7
(22) Anmeldetag: 13.01.2012
(51) Int. Cl.: C04B 24/24, C04B 28/02, C04B 28/04, C04B 28/08, C04B 28/14, C04B 28/16, C08G 65/333, C08G 65/335, C08G 73/06

(54) **Dispergiermittel für anorganische Partikel**
Dispersion agent for inorganic particles
Agent de dispersion pour particules anorganiques

(43) Veröffentlichungstag der Anmeldung: 17.07.2013
(73) Patentinhaber: Construction Research & Technology GmbH, 83308 Trostberg (DE)
(72) Erfinder: Dengler, Joachim, 83342 Tacherting (DE); Kraus, Alexander, 83132 Pittenhart (DE)
(74) Vertreter: BASF IP Association

(56) Entgegenhaltungen:
- EP-A1- 2 128 142
- WO-A1-2010/040611
- WO-A1-2011/073246
- DE-A1-102005 022 843

## Beschreibung

Die vorliegende Erfindung betrifft ein Dispergiermittel für anorganische Partikel, bevorzugt für anorganische Bindemittel, besonders bevorzugt für hydraulische Bindemittel, welches folgende Struktureinheiten enthält
i) mindestens eine Triazinstruktureinheit, bevorzugt mindestens eine 1,3,5 - Triazinstruktureinheit, wobei der Fall mehrerer Triazinstruktureinheiten als Fall A und der Fall einer Triazinstruktureinheit als Fall B bezeichnet werden soll, im Fall A sind bevorzugt 2 bis 6, besonders bevorzugt 2 bis 4 und insbesondere bevorzugt 2 Triazinstruktureinheiten enthalten,
ii) mindestens eine Polyalkylenglykolstruktureinheit, bevorzugt eine bis 4, besonders bevorzugt eine oder zwei Polyalkylenglykolstruktureinheiten, insbesondere bevorzugt eine Polyalkylenglykolstruktureinheit,
iii) und mindestens zwei Phosphorsäureesterstruktureinheiten, bevorzugt sind 2 bis 10, besonders bevorzugt 2 bis 6 und insbesondere bevorzugt 2 bis 4 Phosphorsäureesterstruktureinheiten enthalten, dadurch gekennzeichnet, dass im Fall A mindestens eine der Triazinstruktureinheiten an mindestens einem Kohlenstoffatom eines oder mehrerer aromatischer Triazinringe, bevorzugt an einem oder zwei der Kohlenstoffatome eines oder mehrerer aromatischer Triazinringe, unabhängig voneinander mit einem Substituenten ausgewählt aus den allgemeinen Formeln (IIa) und/oder (IIb) substituiert ist, oder
   im Fall B die Triazinstruktureinheit an mindestens einem Kohlenstoffatom des aromatischen Triazinrings, bevorzugt an einem oder zwei der Kohlenstoffatome des aromatischen Triazinrings, unabhängig voneinander mit einem Substituenten ausgewählt aus den allgemeinen Formeln (IIa) und/oder (IIb) substituiert ist, wobei in den Fällen A und B jeweils die allgemeinen Formeln

   (IIa) -N-(CH₂CH₂-O-PO₃H₂)₂

   und

   (IIb) -NH-CH₂CH₂-O-PO₃H₂

   sind.

Die allgemeine Formel (IIa) mit zwei Phosphorsäureestergruppen ist gegenüber (IIb) mit einem Phosphorsäureester bevorzugt.

Weiterhin ist betroffen ein Verfahren zur Herstellung der Dispergiermittel für anorganische Partikel, dadurch gekennzeichnet, dass
1.) folgende Edukte verwandt werden
   a) eines oder mehrere Trihalogentriazine, bevorzugt 2,4,6-Trihalogen-1,3,5 - Triazin, insbesondere bevorzugt 2,4,6-Trichlor-1,3,5 - Triazin,
   b) eine oder mehrere mindestens eine Polyalkylenglykoleinheit umfassende, mit den Halogensubstituenten des Trihalogentriazins reagierende Verbindung, bevorzugt nucleophile Verbindung, besonders bevorzugt umfasst die Verbindung nur einen mit den Halogensubstituenten des Trihalogentriazins reaktionsfähigen nucleophilen Rest,
   c-1) eine oder mehrere Verbindung(en) unabhängig voneinander ausgewählt aus primären und/oder sekundären Aminoalkoholen, bevorzugt ausgewählt aus primären und/oder sekundären Alkanolaminen, besonders bevorzugt aus primären und/oder sekundären Alkanolaminen, welche mehr als eine Hydroxyfunktion und nur eine primäre oder sekundäre Aminofunktion aufweisen, insbesondere bevorzugt Diethanolamin, und
   c-2) mindestens ein Phosphatierungsmittel, bevorzugt ein Phosphatierungsmittel zur Phosphatierung von Hydroxyfunktionen, besonders bevorzugt ein Phosphatierungsmittel ausgewählt aus Phosphorsäure, Phosphorpentoxid, Phosphorpentachlorid, POCl₃ und/oder Polyphosphorsäure, bevorzugt ist Polyphosphorsäure,
      oder alternativ
2.) dass die Edukte a) und b) verwandt werden und unabhängig voneinander einer oder mehrere an der oder den Hydroxyfunktion(en) phosphatierte, primäre und/oder sekundäre Aminoalkohol(e) C), bevorzugt phosphatierte, primäre und/oder sekundäre Alkanolamin(e), besonders bevorzugt phosphatierte, primäre und/oder sekundäre Alkanolamine, welche mehr als eine phosphatierte Hydroxyfunktion und nur eine primäre oder sekundäre Aminofunktion aufweisen, insbesondere bevorzugt diphosphatiertes und/oder monophosphatiertes Diethanolamin, verwandt werden.

Die Erfindung betrifft auch Baustoffmischungen enthaltend eines oder mehrere Dispergiermittel gemäß einem der Ansprüche 1 bis 10 und eines oder mehrere hydraulische anorganische Bindemittel ausgewählt aus der Gruppe (Portland)zement, α - Calciumsulfat-Hemihydrat, β -Calciumsulfat-Hemihydrat, Calciumsulfat in Form von Anhydrit, Hüttensand, Flugasche, silica fume, Hochofenschlacke, natürliche Puzzolane und/oder gebrannter Ölschiefer, bevorzugt ist (Port)landzement mit einem Anteil größer 40 Gewichtsprozent bezogen auf die Gesamtmenge des anorganischen Bindemittels im anorganischen Bindemittel enthalten. Als Beispiele für natürliche Puzzolane sind Vulkanische Aschen, Trass, Tuffstein, Bims, Sedimentgestein, Tonerden und Ignimbrit zu nennen. Bevorzugt soll unter natürlichen Puzzolanen Trass, Bims, Tonerden, Tuffstein und/oder Ignimbrit verstanden werden.

Betroffen ist auch die Verwendung der Dispergiermittel als Wasserreduktionsmittel für wasserhaltige anorganische Bindemittel, welche ausgewählt sind aus der Gruppe (Portland)zement, α -Calciumsulfat-Hemihydrat, β -Calciumsulfat-Hemihydrat, Calciumsulfat in Form von Anhydrit, Hüttensand, Flugasche, silica fume, Hochofenschlacke, natürliche Puzzolane und/oder gebrannter Ölschiefer, bevorzugt ist (Port)landzement mit einem Anteil größer 40 Gewichtsprozent bezogen auf die Gesamtmenge des anorganischen Bindemittels im anorganischen Bindemittel enthalten, besonders bevorzugt für Beton, insbesondere bevorzugt für Fertigteilwerkbeton.

Die Verwendung der erfindungsgemäßen Dispergiermittel als Mahlhilfsmittel bei der Herstellung von Zement ist ebenfalls betroffen.

Es ist auch betroffen die Verwendung als Mittel zur Verringerung der Viskosität wasserhaltiger anorganischer Bindemittel, die Verwendung zur Steigerung der Frühfestigkeiten wasserhaltiger anorganischer Bindemittel, wobei die anorganischen Bindemittel jeweils ausgewählt sind aus der Gruppe (Portland)zement, α -Calciumsulfat-Hemihydrat, β -Calciumsulfat-Hemihydrat, Calciumsulfat in Form von Anhydrit, Hüttensand, Flugasche, silica fume, Hochofenschlacke, natürliche Puzzolane und/oder gebrannter Ölschiefer, bevorzugt ist (Port)landzement mit einem Anteil größer 40 Gewichtsprozent bezogen auf die Gesamtmenge des anorganischen Bindemittels im anorganischen Bindemittel enthalten.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d.h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Fluidität zu verbessern. Dieser Effekt wird insbesondere auch gezielt bei der Herstellung von Baustoffmischungen, die hydraulische Bindemittel, wie Zement, Kalk, Gips, Calciumsulfat-Hemihydrat (Bassanit) oder wasserfreies Calciumsulfat (Anhydrit) oder latent hydraulische Bindemittel wie Flugasche, Hochofenschlacke oder Puzzolane enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- und Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktionsmittel oder Fließmittel bezeichnet werden. Als derartige Mittel werden in der Praxis insbesondere Copolymere eingesetzt, welche durch radikalische Copolymerisation von Säuremonomeren (beispielsweise (Meth)acrylsäure) mit Polyethermakromonomeren (beispielsweise Polyalkylenglykol(meth)acrylsäureester) hergestellt werden. Derartige Copolymere werden auch Polycarboxylatether (PCE) genannt und sind beispielsweise in der EP 0753 488 A2 beschrieben. Die Eigenschaften der Polycarboxylatether hängen stark von Faktoren wie Säuremonomergehalt und Seitenkettenlänge des Polyalkylenglykols ab. Es ist möglich je nach den Anforderungen relativ gute Wasserreduzierer und slump-retainer herzustellen.

Allerdings hat sich es sich in der Praxis als nachteilig erwiesen, dass die mit Polycarboxylatethern hergestellten Dispersionen anorganischer Bindemittel, insbesondere zementhaltige Bindemittel wie Beton, im frischen Zustand eine relativ hohe Viskosität aufweisen. Es besteht in der Baubranche, besonders im Betonbereich, ein starkes Bedürfnis die Viskositäten der erzeugten Bindemitteldispersionen, insbesondere von Beton zu senken. Zum Beispiel erhöht sich dadurch die Pumpbarkeit des Betons, welcher oft über lange Strecken transportiert werden soll. Auch ist es bei verringerten Viskositäten leichter, sicherer (d.h. alle auszugießenden Stellen werden auch sicher erreicht) und vor allem schneller ein Objekt mit Beton auszugießen. Es ist bekannt, dass relativ stark verwinkelte und zusätzlich mit Stahlbewehrungen ausgerüstete Objekte besonders hohe Anforderungen an den Beton stellen, wobei unter der Verarbeitbarkeit vor allem eine ausreichende Fließfähigkeit und nicht zu hohe Viskosität verstanden wird.

Im Stand der Technik sind aus der WO 2010/026155 Polyethylenglykolstrukturen mit einer Diphosphonatfunktion als Ankergruppe an einem Ende des Polyethylenglykols, bekannt. Diese Verbindungen werden ebenfalls als Dispergiermittel, wie für zum Beispiel Beton, verwandt. Die besagten Fliessmittel weisen zwar im Vergleich zu den Polycarboxylatethern eine verbesserte, das heißt eine relativ zu den Polycarboxylatethern reduzierte Viskosität auf, allerdings werden die Festigkeiten, insbesondere die Frühfestigkeiten des Betons relativ stark nachteilig beeinflusst. Dies ist ein großer Nachteil auf der Baustelle, da der Baufortschritt bekanntlich maßgeblich von den Frühfestigkeiten des Betons abhängt. Im Fertigteilbetonwerk hängen die Zyklen für die Fertigstellung des Betonfertigteils ebenfalls entscheidend von den Frühfestigkeiten ab. Es besteht weiterhin das Bedürfnis in der Bauindustrie die Frühfestigkeiten des Betons, insbesondere im Vergleich zu den Fliessmitteln der WO 2010/026155, weiter zu steigern. Insbesondere sind Fliessmittel mit geringer Viskosität und guter Frühfestigkeitsentwicklung erwünscht. Unter Frühfestigkeit werden insbesondere bevorzugt die Festigkeiten nach 6 bis 24 Stunden nach dem Anrühren der Baustoffmischung mit Wasser verstanden, besonders bevorzugt nach 12 bis 24 Stunden und insbesondere bevorzugt nach 24 Stunden. Die Bestimmung der Frühfestigkeiten erfolgt nach der ASTM Norm C109/C109M - 11a.

Die Schrift WO 2011/073246 A1 offenbart Verfahren zur Herstellung von amphiphilen funktionalisierten hochverzweigten Melamin-Polyamin-Polymeren durch Kondensation von Melamin und Melaminderivaten, wobei die Kondensation mit einem Amin mit wenigstens zwei primären Aminogruppen durchgeführt wird. Die Polymere können an der Aminogruppe ethoxyliert werden oder als Carbobetain-, Sulfobetain- und/oder Phosphobetain- Gruppen derivatisiert werden. Die Polymere werden als oberflächenaktive Stoffe verwendet.

EP 2 128 142 A1 beschreibt amphiphile Moleküle mit einem Triazinkern, welche hydrophile (z.B. Polyethylenglykol) und hydrophobe Blöcke umfassen. Diese können in einer elektrophilen Substitutionsreaktion durch Umsetzung von Cyanurchlorid mit Aminen und endgruppenverschlossenen Polyalkylenglykolen erhalten werden. Eine anionische Modifikation, insbesondere eine Phosphorylierung findet nicht statt.

WO 2010/040611 A1 offenbart die Verwendung sulphonischer Säuren als Katalysator zur Produktion phosphorylierter Polykondensationsprodukte, welche als Dispergiermittel für zementäre Produkte eingesetzt werden. Die aromatischen Einheiten der WO 2010/040611 A1 umfassen keine Triazinstruktureinheiten, sondern nur Aromaten mit mindesten 5 Kohlenstoffatomen.

Die der vorliegenden Erfindung zugrunde liegende Aufgabe ist es somit Dispergiermittel bereitzustellen, welche bei ausreichender Wasserreduktionskapazität und guter Wirtschaftlichkeit (Preis) es insbesondere ermöglichen die Viskositäten anorganischer Partikel, insbesondere von Beton weiter zu reduzieren und dabei sehr gute Frühfestigkeiten zu erzielen. Diese Eigenschaften sind ganz besonders im Fertigteilbetonwerk erwünscht.

Die Lösung dieser Aufgabe ist ein Dispergiermittel für anorganische Partikel, bevorzugt für anorganische Bindemittel, besonders bevorzugt für hydraulische Bindemittel, welches folgende Struktureinheiten enthält
i) mindestens eine Triazinstruktureinheit, bevorzugt mindestens eine 1,3,5 - Triazinstruktureinheit, wobei der Fall mehrerer Triazinstruktureinheiten als Fall A und der Fall einer Triazinstruktureinheit als Fall B bezeichnet werden soll, im Fall A sind bevorzugt 2 bis 6, besonders bevorzugt 2 bis 4 und insbesondere bevorzugt 2 Triazinstruktureinheiten enthalten,
ii) mindestens eine Polyalkylenglykolstruktureinheit, bevorzugt eine bis 4, besonders bevorzugt eine oder zwei Polyalkylenglykolstruktureinheiten, insbesondere bevorzugt eine Polyalkylenglykolstruktureinheit,
iii) und mindestens zwei Phosphorsäureesterstruktureinheiten, bevorzugt sind 2 bis 10, besonders bevorzugt 2 bis 6 und insbesondere bevorzugt 2 bis 4 Phosphorsäureesterstruktureinheiten enthalten, dadurch gekennzeichnet, dass im Fall A mindestens eine der Triazinstruktureinheiten an mindestens einem Kohlenstoffatom eines oder mehrerer aromatischer Triazinringe, bevorzugt an einem oder zwei der Kohlenstoffatome eines oder mehrerer aromatischer Triazinringe, unabhängig voneinander mit einem Substituenten ausgewählt aus den allgemeinen Formeln (IIa) und/oder (IIb) substituiert ist, oder
   im Fall B die Triazinstruktureinheit an mindestens einem Kohlenstoffatom des aromatischen Triazinrings, bevorzugt an einem oder zwei der Kohlenstoffatome des aromatischen Triazinrings, unabhängig voneinander mit einem Substituenten ausgewählt aus den allgemeinen Formeln (IIa) und/oder (IIb) substituiert ist, wobei in den Fällen A und B jeweils die allgemeinen Formeln

   (IIa) -N-(CH₂CH₂-O-PO₃H₂)₂

   und

   (IIb) -NH-CH₂CH₂O-PO₃H₂

   sind.

Als anorganische Partikel können dispergiert werden α -Calciumsulfat-Hemihydrat, β - Calciumsulfat-Hemihydrat, Calciumsulfat in Form von Anhydrit, Kalk, Gips, (Portland)zement, Hüttensand, Flugasche, silica fume, Hochofenschlacke, natürliche Puzzolane und/oder gebrannter Ölschiefer. Als Beispiele für natürliche Puzzolane sind Vulkanische Aschen, Trass, Tuffstein, Bims, Sedimentgestein, Tonerden und Ignimbrit zu nennen. Bevorzugt soll unter natürlichen Puzzolanen Trass, Bims, Tonerden, Tuffstein und/oder Ignimbrit verstanden werden.

Weiterhin ist die Lösung der Aufgabe ein Verfahren zur Herstellung dieser Dispergiermittel, Baustoffmischungen enthaltend eines oder mehrere Dispergiermittel und eines oder mehrere anorganische Bindemittel ausgewählt aus der Gruppe (Portland)zement, α -Calciumsulfat-Hemihydrat, β -Calciumsulfat-Hemihydrat, Calciumsulfat in Form von Anhydrit, Hüttensand, Flugasche, silica fume, Hochofenschlacke, natürliche Puzzolane und/oder gebrannter Ölschiefer, bevorzugt ist (Port)landzement mit einem Anteil größer 40 Gewichtsprozent bezogen auf die Gesamtmenge des anorganischen Bindemittels im anorganischen Bindemittel enthalten. Die Lösung der Aufgabe ist auch die Verwendung der Dispergiermittel als Wasserreduktionsmittel für wasserhaltige anorganische Bindemittel, die Verwendung der Dispergiermittel als Mittel zur Verringerung der Viskosität wasserhaltiger anorganischer Bindemittel, die Verwendung zur Steigerung der Frühfestigkeiten wasserhaltiger anorganischer Bindemittel, wobei die anorganischen Bindemittel jeweils ausgewählt sind aus der Gruppe (Portland)zement, α - Calciumsulfat-Hemihydrat, β -Calciumsulfat-Hemihydrat, Calciumsulfat in Form von Anhydrit, Hüttensand, Flugasche, silica fume, Hochofenschlacke, natürliche Puzzolane und/oder gebrannter Ölschiefer, bevorzugt ist (Port)landzement mit einem Anteil größer 40 Gewichtsprozent bezogen auf die Gesamtmenge des anorganischen Bindemittels im anorganischen Bindemittel enthalten.

Die erfindungsgemäßen Dispergiermittel enthalten i) mindestens eine Triazinstruktureinheit, bevorzugt mindestens eine 1,3,5- Triazinstruktureinheit.

Unter einer Triazinstruktureinheit werden unter der Summenformel C₃N₃ aromatische sechsgliedrige Ringsysteme mit drei Stickstoffatomen im Ring verstanden, bevorzugt sind 1,3,5-Triazinstruktureinheit(en) und/oder 1,2,4-Triazinstruktureinheit(en), besonders bevorzugt sind 1,3,5-Triazinstruktureinheit(en). Die freien Valenzen an den Kohlenstoffatomen werden dabei nicht betrachtet.

Zur leichteren Unterscheidung soll der Fall mehrerer Triazinstruktureinheiten als Fall A und der Fall einer Triazinstruktureinheit als Fall B bezeichnet werden. Im Fall A sind bevorzugt 2 bis 6, besonders bevorzugt 2 bis 4 und insbesondere bevorzugt 2 Triazinstruktureinheiten enthalten.

Insbesondere bevorzugt ist eine 1,3,5-Triazinstruktureinheit durch folgende Strukturformel definiert:

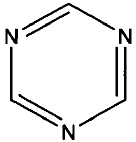

Insbesondere bevorzugt ist eine 1,2,4-Triazinstruktureinheit durch folgende Strukturformel definiert:

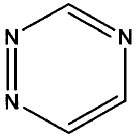

Dabei ist bevorzugt die Triazinstruktureinheit, bevorzugt die 1,3,5-Triazinstruktureinheit, an den Kohlenstoffatomen zum Beispiel mit die Struktureinheiten ii) und iii) umfassenden Resten substituiert. Weitere Ausführungen hierzu sind der nachstehenden Beschreibung zu entnehmen. Die Reste können zum Beispiel auch Halogene (F, Cl, Br, J) sein, welche beispielsweise bei der Herstellung aus nicht vollkommen abreagierten Edukten, wie beispielsweise 2,4,6-Trihalogen-1,3,5 Triazin stammen können. Bevorzugt liegen keine Halogene mehr als Substituenten an den Kohlenstoffatomen der Triazinstruktureinheiten vor. Die Substituenten an der Triazinstruktureinheit oder den Triazinstruktureinheiten sind nicht besonders beschränkt, unterliegen aber der Maßgabe, dass anspruchsgemäß auch Struktureinheiten vom Typ ii) und iii) im Dispergiermittel vorhanden sind. Beispiele für Substituenten an den Kohlenstoffatomen der Triazinstruktureinheiten sind in den abhängigen Ansprüchen genannt. In der nachfolgenden Beschreibung gelten die allgemein für Triazine, bzw. Triazinstruktureinheiten gemachten Aussagen selbstverständlich auch für spezielle Triazine, wie beispielsweise 1,2,4-Triazine und insbesondere für die bevorzugten 1,3,5-Triazine und deren halogenierte Eduktvorstufen.

Der Gewichtsanteil aller Triazinstruktureinheiten i) in dem Dispergiermittel beträgt bevorzugt von 0.1 bis zu 17 Gew. %, besonders bevorzugt von 0.1 bis 12 Gew. %, insbesondere bevorzugt von 0.3 bis 10 Gew. %, jeweils bezogen auf die Gesamtmasse des Dispergiermittels. Besonders bevorzugt wird der Gewichtsanteil aller Triazinstruktureinheiten i) als Summe der Masse aller Struktureinheiten des Triazin (M(C₃N₃) = 78 g/mol) im Dispergiermittel, bezogen auf die Gesamtmasse des Dispergiermittels berechnet.

Bei der Berechnung der Gesamtmasse des Dispergiermittels soll ebenfalls die Massenberechnung von eventuell in einer (teil)neutralisierten Form vorliegenden Phosphorsäureesterstruktureinheiten iii) in analoger Weise als -O-PO₃H₂ mit der Molaren Masse M(-O-PO₃H₂) = 189.9 g/mol) erfolgen. Die Gesamtmasse des Dispergiermittels soll bei der Berechnung aller Gewichtsanteile von i), und auch des nachfolgend beschriebenen Gewichtsanteils von ii) und iii) auf diese Weise berechnet werden.

Die erfindungsgemäßen Dispergiermittel enthalten ii) mindestens eine Polyalkylenglykolstruktureinheit, bevorzugt eine bis 4, besonders bevorzugt eine oder zwei Polyalkylenglykolstruktureinheiten, insbesondere bevorzugt eine Polyalkylenglykolstruktureinheit. Die Polyalkylenglykolstruktureinheiten sind meist hydrophile Strukturen, welche vor allem für eine sterische Abstoßung zwischen auf Zementpartikel aufgezogenen erfindungsgemäßen Dispergiermittelmolekülen sorgen.

Der Gewichtsanteil aller Polyalkylenglykolstruktureinheiten ii) in dem Dispergiermittel beträgt bevorzugt von 12 bis zu 90 Gew.-%, besonders bevorzugt von 25 bis 80 Gew.-%, insbesondere bevorzugt von 30 bis 70 Gew.-%, jeweils bezogen auf die Gesamtmasse des Dispergiermittels. Besonders bevorzugt wird der Gewichtsanteil aller Polyalkylenglykolstruktureinheiten ii) im Dispergiermittel durch Bilden der Summe aller Massen der Struktureinheit(en) (AO)ₙ im Dispergiermittel berechnet, wobei auf die Gesamtmasse des Dispergiermittels bezogen wird. A ist dabei ein Alkylen mit 2 bis 18 Kohlenstoffatomen, und n ist eine ganze Zahl von 2 bis 500. Bevorzugt ist A ein Alkylen mit 2 Kohlenstoffatomen aufgrund der entsprechenden Hydrophilie dieser Strukturen.

Der Begriff Polyalkylenglykolstruktureinheit bedeutet bevorzugt, dass mindestens zwei direkt benachbarte Alkylenglykolstruktureinheiten vorliegen, besonders bevorzugt bedeutet dies im einfachsten Fall von nur zwei Alkylenglykolstruktureinheiten, dass eine Struktureinheit der Form -AO-AO- vorliegt, wobei A unabhängig voneinander ein Alkylen ist und O Sauerstoff ist, bevorzugt ist A unabhängig voneinander ein Alkylen mit 2 bis 18 Kohlenstoffatomen. Bevorzugt liegen die Alkylenglykolstruktureinheiten als allgemeine Formel (AO)ₙ mit n einer ganzen Zahl von 2 bis 500, bevorzugt 5 bis 300, besonders bevorzugt 15 bis 200, insbesondere bevorzugt 20 bis 80 vor. A bedeutet unabhängig voneinander ein Alkylen, bevorzugt ist A unabhängig voneinander ein Alkylen mit 2 bis 18 Kohlenstoffatomen und O ist Sauerstoff. Eventuell in einem Molekül vorkommende, nicht der Definition von (AO)ₙ mit n einer ganzen Zahl von 2 bis 500 genügende Struktureinheiten sollen nicht als Polyalkylenglykolstruktureinheit im Sinne dieser Patentanmeldung betrachtet werden. Insbesondere sollen voneinander getrennt im Molekül vorliegende, einzelne Alkylenglykole AO nicht als Polyalkylenglykolstruktureinheit im Sinne dieser Patentanmeldung betrachtet werden.

Die Polyalkylenglykolstruktureinheiten der allgemeinen Formel (AO)ₙ können bezüglich A gleich oder verschieden sein und sind bevorzugt unabhängig voneinander ausgewählt aus einem Alkylen mit 2 bis 18 Kohlenstoffatomen. Besonders bevorzugt ist A zu mindestens 60 mol % ein Alkylen mit 2 Kohlenstoffatomen, insbesondere bevorzugt zu mindestens 80 mol % ein Alkylen mit 2 Kohlenstoffatomen, wobei die Angaben in mol % jeweils bezogen sind auf die Gesamtmolzahl aller Struktureinheiten (AO)ₙ im Dispergiermittel. Die Polyalkylenglykolstruktureinheiten der allgemeinen Formel (AO)ₙ können bei Anwesenheit verschiedener Alkylenglykolwiederholungseinheiten (AO) sowohl in (eventuell mehrfachen) Blöcken (Abschnitte mit gleichen Alkylenglykolwiederholungseinheiten), als auch in Form einer annähernd statistischen Verteilung der Alkylenglykolwiederholungseinheiten vorliegen.

Die erfindungsgemäßen Dispergiermittel enthalten iii) mindestens zwei Phosphorsäureesterstruktureinheiten, bevorzugt sind 2 bis 10, besonders bevorzugt 2 bis 6 und insbesondere bevorzugt 2 bis 4 Phosphorsäureesterstruktureinheiten enthalten.

Die Phosphorsäureesterstruktureinheiten sind im alkalischen, wässrigen Milieu (z.B. zementäre Systeme) negativ geladen und können über elektrostatische Wechselwirkungen eine Art Ankerfunktion zur positiv geladenen Zementkornoberfläche bilden.

Bevorzugt ist oder sind die Phosphorsäureesterstruktureinheit(en) iii) Phosphorsäuremonoesterstruktureinheit(en). Insbesondere weisen die Phosphorsäuremonoesterstruktureinheit(en) folgende Teilstruktur -O-PO₃H₂ auf. Die Phosphorsäureesterstruktureinheiten umfassen dabei auch die entsprechenden Ester in einer (teil)neutralisierten Form. Dabei können Protonen der vorstehend genannten Struktur durch beispielsweise (Erd)alkalimetallionen oder durch Ammoniumionen ganz oder teilweise ersetzt sein.

Bevorzugt sind Calcium-Salze der erfindungsgemäßen Dispergiermittel, wobei bevorzugt das Kation Calcium an der Phosphorsäureesterstruktureinheit vorliegt. Die Calciumsalze der erfindungsgemäßen Dispergiermittel zeichnen sich dadurch aus, dass im Vergleich zu beispielsweise der protonierten Form (Säure) oder zu den entsprechenden Alkalimetallsalzen sehr gute slump-Erhalt Eigenschaften gefunden wurden. Die Calciumsalze der erfindungsgemäßen Dispergiermittel liefern deutlich niedrigere Adsorptionsgeschwindigkeiten auf die Oberfläche der Zementpartikel und führen deshalb zu einem höheren Slumperhalt. Die Erfindung betrifft auch die Verwendung von Erdalkalisalzen der erfindungsgemäßen Dispergiermittel gemäß einem der Ansprüche 1 bis 11 als slump-retainer.

Der Gewichtsanteil aller Phosphorsäureesterstruktureinheiten iii) in dem Dispergiermittel beträgt bevorzugt von 0.5 bis zu 90 Gew. %, bevorzugt von 2 bis 60, insbesondere bevorzugt von 3 bis 55 Gew. %, jeweils bezogen auf die Gesamtmasse des Dispergiermittels. Besonders bevorzugt wird der Gewichtsanteil aller Phosphorsäureesterstruktureinheiten iii) berechnet als Summe aller Struktureinheiten -O-PO₃H₂ (M(-O-PO₃H₂) = 189.9 g/mol) in dem Dispergiermittel. Falls Phosphorsäureesterstruktureinheiten iii) in einer (teil)neutralisierten Form vorliegen sollten, soll trotzdem die Massenberechnung als -O-PO₃H₂ mit der Molaren Masse M(-O-PO₃H₂) = 189.9 g/mol) erfolgen. Unter einer (teil)neutralisierten Form soll dabei verstanden werden, dass die Protonen an der oder den Phosphorsäureestergruppen teilweise oder ganz durch andere Kationen ersetzt wurden, wie zum Beispiel (Erd)alkalimetallionen.

Die erfindungsgemäßen Dispergiermittel werden bezogen auf die Summe aller anorganischen Partikel, bevorzugt auf hydraulische Bindemittel, insbesondere bevorzugt auf (Portland)zement bevorzugt in Dosierungen von 0,01 Gew. % bis 5 Gew.-% besonders bevorzugt in Dosierungen von 0,1 Gew.-% bis 2 Gew.-%, verwandt. Bezogen auf (Portland)zement ist bevorzugt die Dosierung 0,2 Gew.-% - 1,0 Gew.-%

Die erfindungsgemäßen Dispergiermittel ermöglichen es dem Anwender in der Bauindustrie, insbesondere im Betonfachbereich eine ausreichende Wasserreduktion bei relativ geringen Viskositäten des Betons und guten Frühfestigkeiten zu erzielen.

Bevorzugt sind Dispergiermittel, dadurch gekennzeichnet, dass im Fall A mindestens eine der Triazinstruktureinheiten an mindestens einem Kohlenstoffatom eines oder mehrerer aromatischer Triazinringe, bevorzugt an einem oder zwei der Kohlenstoffatome eines oder mehrerer aromatischer Triazinringe unabhängig voneinander mit einem Substituenten ausgewählt aus -N-R(-R¹), -S-R und/oder -O-R substituiert ist, oder
im Fall B die Triazinstruktureinheit an mindestens einem Kohlenstoffatom des aromatischen Triazinrings, bevorzugt an einem oder zwei der Kohlenstoffatome des aromatischen Triazinrings, unabhängig voneinander mit einem Substituenten ausgewählt aus N-R(-R¹), -S-R und/oder -O-R substituiert ist, wobei im Fall A wie auch im Fall B R jeweils gleich oder verschieden ist und unabhängig voneinander definiert ist als ein mindestens eine Polyalkylenglykolstruktureinheit umfassender Rest und wobei R¹ gleich oder verschieden ist und unabhängig voneinander definiert ist als H, C₁- bis C₂₀-Alkylrest oder ein eine Polyalkylenglykolstruktureinheit umfassende Struktureinheit, bevorzugt H.

In den Fällen A und B können also die vorstehend genannten Substituenten gleich oder verschieden sein und sind unabhängig voneinander -N-R(-R¹), -S-R und/oder -O-R. Das heißt, dass eine oder mehrere Arten der Anbindung von Polyalkylenglykolstruktureinheiten an die Triazinstruktureinheit(en) über Edukte in Form von Aminen, Mercaptanen und/oder Alkoholen in einem Dispergiermittelmolekül möglich sind. Bevorzugt sind Alkohole (als Edukt), das heißt der Substituent ist O-R, mit den vorstehend genannten Bedeutungen für R. Die Art der vorgeschlagenen Anbindung von Polyalkylenglykolen an das Triazingerüst ist insbesondere aufgrund der guten Reaktivität der Nucleophile, aber auch aufgrund der Stabilität der entstehenden Bindungen bevorzugt. Weitere Details hierzu finden sich im weiteren Text bei der Beschreibung der Herstellungsverfahren der erfindungsgemäßen Dispergiermittel.

Bevorzugt sind Dispergiermittel, dadurch gekennzeichnet, dass der Substituent an der Triazinstruktureinheit oder die Substituenten an den Triazinstruktureinheiten -O-R ist oder sind, wobei R gleich oder verschieden ist und unabhängig voneinander definiert ist als ein mindestens eine Polyalkylenglykolstruktureinheit umfassender Rest.

Bevorzugt sind Dispergiermittel, dadurch gekennzeichnet, dass mindestens ein eine Polyalkylenglykolstruktureinheit umfassender Rest der allgemeinen Formel

(I) -(AO)ₙ-R²

in dem Dispergiermittel enthalten ist,
wobei A ein Alkylen mit 2 bis 18 Kohlenstoffatomen ist, bevorzugt ist A zu mindestens 60 mol % ein Alkylen mit 2 Kohlenstoffatomen, insbesondere bevorzugt zu mindestens 80 mol % ein Alkylen mit 2 Kohlenstoffatomen, wobei die Angaben in mol % jeweils bezogen sind auf die Gesamtmolzahl aller Struktureinheiten (AO)ₙ im Dispergiermittel, n ist eine ganze Zahl von 2 bis 500, bevorzugt 5 bis 300, besonders bevorzugt 15 bis 200, insbesondere bevorzugt 20 bis 80,
R² ist gleich oder verschieden und unabhängig voneinander H und/oder ein Kohlenwasserstoffrest.

Als Rest R² ist ein Kohlenwasserstoffrest gegenüber H bevorzugt. Der Kohlenwasserstoffrest kann beispielsweise ein verzweigter oder unverzweigter aliphatischer Rest, ein aromatischer Rest, Arylrest oder sonstiger Kohlenwasserstoffrest sein. Besonders bevorzugt ist R² ein Alkylrest, insbesondere bevorzugt ein C₁- bis C₂₀- Alkylrest. Als Alkylreste sind C₁- bis C₄- Alkylreste bevorzugt, insbesondere Methylreste.

Die Polyalkylenglykolstruktureinheiten (AO)ₙ in der allgemeinen Formel (I) können analog wie vorstehend erwähnt bezüglich A gleich oder verschieden sein und sind bevorzugt unabhängig voneinander ausgewählt aus einem Alkylen mit 2 bis 18 Kohlenstoffatomen. Bevorzugt ist A zu mindestens 60 mol % ein Alkylen mit 2 Kohlenstoffatomen, insbesondere bevorzugt zu mindestens 80 mol % ein Alkylen mit 2 Kohlenstoffatomen, wobei die Angaben in mol % jeweils bezogen sind auf die Gesamtmolzahl aller Struktureinheiten (AO)ₙ im Dispergiermittel. Die Polyalkylenglykolstruktureinheiten der allgemeinen Formel (AO)ₙ können bei Anwesenheit verschiedener Alkylenglykolwiederholungseinheiten (AO) sowohl in (eventuell mehrfachen) Blöcken (Abschnitte mit gleichen Alkylenglykolwiederholungseinheiten), als auch in Form einer annähernd statistischen Verteilung der Alkylenglykolwiederholungseinheiten vorliegen.

Wie vorstehend schon erwähnt wurde, eignen sich Polyalkylenglykolstruktureinheiten besonders dazu, eine sterische Abstoßung zwischen auf Zementpartikel aufgezogenen erfindungsgemäßen Dispergiermittelmolekülen zu erzeugen, was eine besonders effiziente Dispergierung der Partikel ermöglicht. Polyalkylenglykolstruktureinheiten der allgemeinen Strukturformel (I) eignen sich hierzu besonders.

Im Falle der Abhängigkeit des Anspruchs 4 von Anspruch 2 oder 3 entspricht bevorzugt der mindestens eine Polyalkylenglykolstruktureinheit umfassende Rest R der allgemeinen Formel (I).

Bevorzugt sind Dispergiermittel, dadurch gekennzeichnet, dass das Gewichtsverhältnis der Triazinstruktureinheit(en) i) zu den Phosphorsäureesterstruktureinheiten iii) im Dispergiermittel zwischen 1/4.5 und 1/12, bevorzugt zwischen 1/5 und 1/10, insbesondere bevorzugt zwischen 1/6 und 1/9.5 ist.

Insbesondere bevorzugt ist das Gewichtsverhältnis der Triazinstruktureinheit(en) i) zu den Phosphorsäureesterstruktureinheiten iii), bevorzugt zu den Phosphorsäuremonoesterstruktureinheiten, zwischen 1/7 und 1/12.

Bei der Berechnung des vorstehend genannten Gewichtsverhältnisses wird die Summe aller Massen der Triazinstruktureinheit(en) im Dispergiermittel gebildet und durch die Summe aller Massen der Phosphorsäureesterstruktureinheiten iii) dividiert. Besonders bevorzugt wird dabei die Masse des Triazin (C₃N₃) als "molare" Masse mit 78 g/mol berechnet. Besonders bevorzugt wird dabei die Masse der Phosphorsäureesterstruktureinheit (-O-PO₃H₂) als "molare" Masse mit 189.9 g/mol berechnet. Wie vorstehend erwähnt, soll in analoger Weise diese Art der Berechnung auch bei eventuell vorliegender (Teil)neutralisierung des Phosphorsäureesters zu Anwendung kommen.

Vorteil in diesem Bereich der Gewichtsverhältnisse von i) zu iii) ist, dass ein ausgewogenes Gleichgewicht zwischen adsorbiertem und nicht adsorbiertem Dispergiermittel herrscht. Auf diese Weise ist das Dispergiermittel bei ausreichender anfänglicher Wasserreduktion auch für eine längere Anwendungsdauer geeignet (slump Erhalt).

Bevorzugt sind Dispergiermittel des Falls A, dadurch gekennzeichnet, dass eine oder mehrere, mindestens zwei Triazinstruktureinheiten verbindende Struktureinheit(en) der allgemeinen Formel (IIIa) und/oder (IIIb) enthalten ist oder sind und die allgemeinen Formeln der Struktureinheiten (IIIa) und (IIIb) sind

(IIIa) Q-(T-Triazin)ₖ,

wobei
k eine ganze Zahl größer als 1 ist, bevorzugt 2 bis 6, insbesondere bevorzugt 2 oder 3 ist,
T O, -N-H oder S ist und
Q ein beliebiger Kohlenwasserstoffrest ist, bevorzugt ein Alkylenrest, besonders bevorzugt ein Alkylenrest mit 2 bis 20 Kohlenstoffatomen, insbesondere bevorzugt ist Q ein Ethylenrest und T ist - N-H- oder O,

   (IIIb) (Triazin)-U-[(CH₂)₂-N(V)-]ₘ - (CH₂)₂-U-(-Triazin), wobei

   m eine ganze Zahl von 1 bis 6 ist, bevorzugt ist m eine ganze Zahl von 1 bis 3,
   U ist gleich oder verschieden und unabhängig voneinander O, S und/oder -N-H, bevorzugt ist U -N-H,
   V ist H und/oder Triazin.

In der allgemeinen Formel (IIIa) ist T als -N-H oder O bevorzugt.
Beispiele für Verbindungen (Edukte) der allgemeinen Formel (IIIa) sind Alkylendiamine, wie beispielsweise Hexamethylendiamin, insbesondere Ethylendiamin (T = -N-H). Für den Fall T = O und k = 3 ist Glycerin zu nennen.

Beispiele für Verbindungen (Edukte) der allgemeinen Formel (IIIb) sind Polyethylenamine, wie z.B. Diethylentriamin (m = 1, U = -N-H), Triethylentetramin (m = 2, U = -N-H) und/oder Tetraethylenpentamin (m = 3, U = -N-H).

Bevorzugt sind Dispergiermittel des Falls A, dadurch gekennzeichnet, dass mindestens eine Phosphorsäurediesterstruktureinheit im Dispergiermittel enthalten ist, bevorzugt entspricht die Phosphorsäurediesterstruktureinheit der allgemeinen Formel (IV),

(IV) -O-PO(OH)-O-

besonders bevorzugt ist eine mindestens zwei Triazinstruktureinheiten, bevorzugt 1,3,5 - Triazinstruktureinheiten, verbindende Struktur der allgemeinen Formel (IVa) im Dispergiermittel enthalten,

(IVa) (Triazin)-N(W)-(CH₂)₂-O-PO(OH)-O-(CH₂)₂-N(W)-(Triazin), wobei W unabhängig voneinander -CH₂CH₂-O-PO₃H₂ und/oder H ist. Bevorzugt ist W -CH₂CH₂-O-PO₃H₂.

Dispergiermittel des Falls A mit mindestens einer Phosphorsäurediesterstruktureinheit im Dispergiermittel sind besonders zur Erhaltung der Fliessfähigkeit (im Allgemeinen über einen Zeitraum bis zu ca. 30 Minuten) anorganischer Partikel, insbesondere von Beton, geeignet. Durch Hydrolyse der Phosphorsäurediester werden Vernetzungen der Dispergiermittel aufgehoben, die Anzahl der zur Verfügung stehenden Dispergiermittelmoleküle steigt an und auch die Anzahl der als Ankergruppen zur Verfügung stehenden negativ geladenen Phosphationen steigt an. Dadurch lässt sich der slump von Beton erhalten.

Bevorzugt sind Dispergiermittel des Falls A, dadurch gekennzeichnet, dass zwei Triazinstruktureinheiten enthalten sind, eine oder zwei Polyalkylenglykolstruktureinheiten enthalten sind und 3 bis 6 Phosphorsäureesterstruktureinheiten enthalten sind. Bevorzugt sind im Fall von zwei Polyalkylenglykolstruktureinheiten 3 bis 4 Phosphorsäureesterstruktureinheiten enthalten und im Fall einer Polyalkylenglykolstruktureinheit 3 bis 6, insbesondere bevorzugt 4 bis 6 Phosphorsäureesterstruktureinheiten enthalten.

Es hat sich erwiesen, dass bevorzugt ein ausgewogenes Verhältnis von Polyalkylenglykolstruktureinheiten und Phosphorsäureesterstruktureinheiten wichtig für ein ausgewogenes Verhältnis von Wasserreduktion und slump-Erhalt ist.

Bevorzugt sind Dispergiermittel des Falls B nach einem der Ansprüche 1 bis 5, wobei nur eine Triazinstruktureinheit enthalten ist, dadurch gekennzeichnet, dass eine oder zwei Polyalkylenglykolstruktureinheiten und zwei bis vier Phosphorsäureesterstruktureinheiten enthalten sind, bevorzugt liegen bei Anwesenheit einer Polyalkylenglykolstruktureinheit zwei bis vier Phosphorsäureesterstruktureinheiten vor, besonders bevorzugt liegen bei Anwesenheit von zwei Polyalkylenglykolstruktureinheiten zwei Phosphorsäureesterstruktureinheiten vor.

Bevorzugt sind Dispergiermittel des Falls B nach Anspruch 9, dadurch gekennzeichnet, dass das Dispergiermittel der Struktur (Va) oder (Vb) entspricht, wobei 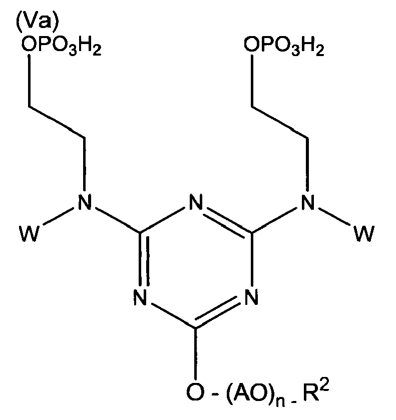 ist und 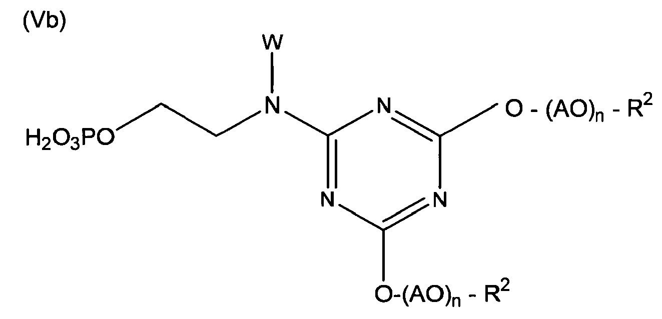 ist, wobei jeweils in den allgemeinen Formeln (Va) und (Vb) R² gleich oder verschieden ist und unabhängig voneinander H und/oder ein Kohlenwasserstoffrest ist und W unabhängig voneinander -CH₂CH₂-O-PO₃H₂ und/oder H ist. Bevorzugt ist W -CH₂CH₂-O-PO₃H₂. Als Rest R² ist ein Kohlenwasserstoffrest gegenüber H bevorzugt. Der Kohlenwasserstoffrest kann beispielsweise ein verzweigter oder unverzweigter aliphatischer Rest, ein aromatischer Rest, Arylrest oder sonstiger Kohlenwasserstoffrest sein. Besonders bevorzugt ist R² ein Alkylrest, insbesondere bevorzugt ein C₁- bis C₂₀- Alkylrest. Als Alkylreste sind C₁- bis C₄- Alkylreste bevorzugt, insbesondere Methylreste. Der Substituent A ist ein Alkylen und hat die vorstehend genannte Bedeutung.

Bevorzugt sind die Strukturen mit zwei Phosphorsäureestergruppen oder insbesondere bevorzugt mit vier Phosphorsäureestergruppen, entsprechend den Formeln 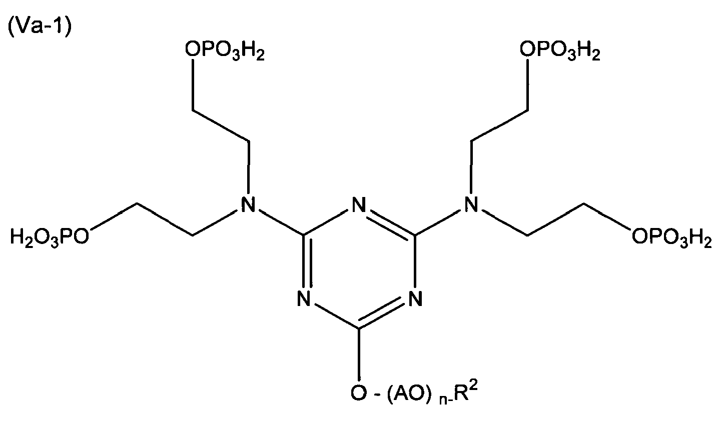 und

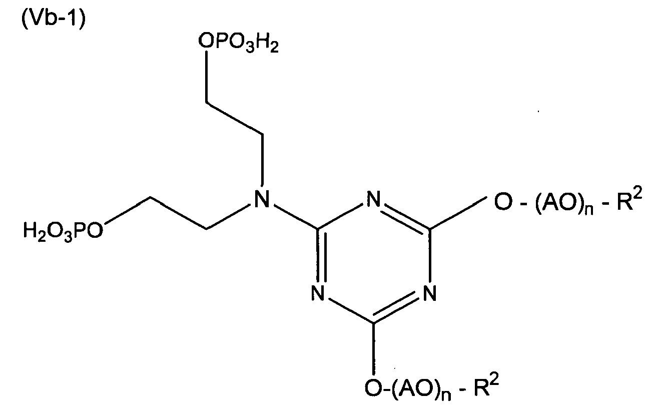

Dabei hat der Substituent R² in den Formeln (Va-1) und (Vb-1) jeweils die vorstehend genannte Bedeutung. Der Substituent A ist ein Alkylen und hat die vorstehend genannte Bedeutung.

Die Erfindung betrifft auch ein Verfahren zur Herstellung von Dispergiermitteln für anorganische Partikel, dadurch gekennzeichnet, dass
1.) folgende Edukte verwandt werden
   a) eines oder mehrere Trihalogentriazine, bevorzugt 2,4,6-Trihalogen-1,3,5 - Triazin, insbesondere bevorzugt 2,4,6-Trichlor-1,3,5 - Triazin,
   b) eine oder mehrere mindestens eine Polyalkylenglykoleinheit umfassende, mit den Halogensubstituenten des Trihalogentriazins reagierende Verbindung, bevorzugt nucleophile Verbindung, besonders bevorzugt umfasst die Verbindung nur einen mit den Halogensubstituenten des Trihalogentriazins reaktionsfähigen nucleophilen Rest,
   c-1) eine oder mehrere Verbindung(en) unabhängig voneinander ausgewählt aus primären und/oder sekundären Aminoalkoholen, bevorzugt ausgewählt aus primären und/oder sekundären Alkanolaminen, besonders bevorzugt aus primären und/oder sekundären Alkanolaminen, welche mehr als eine Hydroxyfunktion und nur eine primäre oder sekundäre Aminofunktion aufweisen, insbesondere bevorzugt Diethanolamin, und
   c-2) mindestens ein Phosphatierungsmittel, bevorzugt ein Phosphatierungsmittel zur Phosphatierung von Hydroxyfunktionen, besonders bevorzugt ein Phosphatierungsmittel ausgewählt aus Phosphorsäure, Phosphorpentoxid, Phosphorpentachlorid, POCl₃ und/oder Polyphosphorsäure, bevorzugt ist Polyphosphorsäure,
      oder alternativ
2.) dass die Edukte a) und b) verwandt werden und unabhängig voneinander einer oder mehrere an der oder den Hydroxyfunktion(en) phosphatierte, primäre und/oder sekundäre Aminoalkohol(e) C), bevorzugt phosphatierte, primäre und/oder sekundäre Alkanolamin(e), besonders bevorzugt phosphatierte, primäre und/oder sekundäre Alkanolamine, welche mehr als eine phosphatierte Hydroxyfunktion und nur eine primäre oder sekundäre Aminofunktion aufweisen, insbesondere bevorzugt diphosphatiertes und/oder monophosphatiertes Diethanolamin, verwandt werden.

Im Folgenden sollen die einzelnen Edukte beschrieben werden:

### Edukt a):

Als Edukt a) können beispielsweise, ohne Anspruch auf Vollständigkeit zu erheben, 2,4,6-Trihalogen-1,3,5 - Triazine der Reihe der Halogene, F, Cl, Br, J zum Einsatz kommen. Bevorzugt sind Cl, Br, J, besonders bevorzugt ist 2,4,6-Trichlor-1,3,5 - Triazin. Auch können 3,5,6-Trihalogen-1,2,4 -Triazine, wie beispielsweise 3,5,6-Trichlor-1,2,4 - Triazin verwendet werden.

### Edukt b):

Als Edukt b) können eine mindestens eine Polyalkylenglykoleinheit umfassende, mit den Halogensubstituenten des 2,4,6-Trihalogen-1,3,5 - Triazins, bzw. anderer vorstehend beschriebender Triazinderivate reagierende Verbindungen, bevorzugt nucleophile Verbindungen, zum Einsatz kommen. Bevorzugt umfasst die Verbindung nur einen mit den Halogensubstituenten des Trihalogentriazins reaktionsfähigen nucleophilen Rest.
Zum Einsatz kommen besonders bevorzugt eine oder mehrere Verbindungen unabhängig voneinander ausgewählt aus primären oder sekundären Aminen, aus Mercaptanen und/oder Alkoholen, besonders bevorzugt werden die primären Amine, sekundären Amine, Mercaptane und Alkohole unabhängig voneinander ausgewählt aus einer der allgemeinen Strukturformeln
NH-R(-R¹), H-S-R und/oder H-O-R,
wobei R jeweils gleich oder verschieden ist und unabhängig voneinander definiert ist als ein mindestens eine Polyalkylenglykolstruktureinheit umfassender Rest und wobei R¹ gleich oder verschieden ist und unabhängig voneinander definiert ist als H, C₁- bis C₂₀- Alkylrest oder ein eine Polyalkylenglykolstruktureinheit umfassende Struktureinheit, bevorzugt H. Es können eines oder mehrere Edukte b) unabhängig voneinander benutzt werden.

Beispiele für das Edukt b) sind Jeffamin® M2006, Jeffamin® M2070 (Huntsman), Methoxypolyethylenglykolthiol (Aldrich), Methylpolyethylenglykol (Pluriol® A 1010 E oder - Pluriol® A 5010 E).

### Edukt c-1):

Als Aminoalkohole sind primäre und/oder sekundäre Alkanolamine bevorzugt. Insbesondere bevorzugt sind Alkanolamine, welche mehr als eine Hydroxyfunktion und nur eine primäre oder sekundäre Aminofunktion aufweisen. Am meisten bevorzugt sind Diethanolamin und/oder Ethanolamin. Diethanolamin ist gegenüber Ethanolamin bevorzugt, da durch die Anwesenheit von zwei Hydroxyfunktionen doppelt so viele Phosphatierungsstellen an den Hydroxyfunktionen gebildet werden können als im Fall von Ethanolamin. Die zumindest im alkalischen, wässrigen Milieu (zementäre Systeme) negativ geladenen Phosphorsäuregruppen können über elektrostatische Wechselwirkungen mit der positiv geladenen Zementkornoberfläche als eine Art Ankerfunktion auf dem Zementkorn wirken.
Es können eines oder mehrere Edukte c-1) unabhängig voneinander benutzt werden.

Es sind auch primäre und / oder sekundäre aromatische Aminoalkohole geeignet. Zum Beispiel die aromatischen Verbindungen Dihydroxybenzylamin, Hydroxydopamin oder Dihydroxyanilin. Unter aromatischen Aminoalkoholen sollen allgemein Verbindungen mit einer aromatischen Struktur im Molekül verstanden werden. Als aromatische Aminoalkohole können beispielsweise Dihydroxybenzylamin, Hydroxydopamin und/oder Dihydroxyanilin eingesetzt werden.

Die primären und/oder sekundären Amine b) sollen (zur Abgrenzung von c-1)) bevorzugt keine primären und/oder sekundären Aminoalkohole umfassen und umgekehrt die Alkohole b) sollen keine primären und/oder sekundären Aminoalkohole umfassen. Das bedeutet beispielsweise, dass ein primäres oder auch ein sekundäres Amin b) bevorzugt keine Hydroxyfunktionen enthalten soll. Auch die Mercapatane b) sollen bevorzugt keine primären und/oder sekundären Aminoalkohole umfassen.

### Edukt c-2):

Das Edukt c-2) ist ein Phosphatierungsmittel, bevorzugt ein Phosphatierungsmittel zur Phosphatierung von Hydroxyfunktionen, besonders bevorzugt ein Phosphatierungsmittel ausgewählt aus Phosphorsäure, Phosphorpentoxid, Phosphorpentachlorid, POCl₃ und/oder Polyphosphorsäure, bevorzugt ist Polyphosphorsäure. Es können eines oder mehrere dieser Phosphatierungsmittel nacheinander oder gleichzeitig eingesetzt werden. Der Einsatz der Phosphatierungsmittel bedingt aufgrund der sauren Natur der Phosphatierungsmittel bevorzugt einen niedrigen pH-Bereich. Grundsätzlich können eines oder mehrere Edukte c-2) unabhängig voneinander benutzt werden.

### Edukt C):

Das Edukt C) kommt im Wesentlichen beim Verfahren 2.) zum Einsatz. Bevorzugt als Edukt C) sind primäre und/oder sekundäre, an den Hydroxygruppen phosphatierte Aminoalkohole.
Aus der Gruppe der Aminoalkohole sind phosphatierte primäre und/oder sekundäre Alkanolamine besonders bevorzugt. Auch aromatische primäre und/oder sekundäre phosphatierte Aminoalkohole können eingesetzt werden, beispielsweise Dihydroxybenzylamindisphosphat, Hydroxydopaminphosphat oder Dihydroxyanilindisphosphat.

Das Edukt C) kann in bekannter Weise durch eine entsprechende Phosphatierungsreaktion primärer und/oder sekundärer Aminoalkohole hergestellt werden. Das erhaltene Reaktionsprodukt (Edukt C) kann isoliert werden und dann in mehr oder weniger reiner Form in dem erfindungsgemäßen Verfahren zur Herstellung der Dispergiermittel weiterverwendet werden. Es kann aber auch die erhaltene, das Edukt C) enthaltende Reaktionsmischung ohne weitere Isolierung in dem erfindungsgemäßen Verfahren verwendet werden (in-situ Herstellung des Edukts C und Weiterverarbeitung in dem erfindungsgemäßen Verfahren zur Herstellung der Dispergiermittel).

Beispiele für phosphatierte primäre und/oder sekundäre Alkanolamine sind an der Hydroxyfunktion phosphatiertes Ethanolamin (Ethanolaminphosphat (NH₂-CH₂CH₂-O-PO₃H₂)), diphosphatiertes Diethanolamin (Diethanolamindiphosphat (NH-(CH₂CH₂-O-PO₃H₂)₂) und/oder monophosphatiertes Diethanolamin (Diethanolaminmonophosphat (NH(CH₂CH₂-O-H)(CH₂CH₂-O-PO₃H₂)).
Bevorzugt sind Alkanolamine, welche mehr als eine phosphatierte Hydroxyfunktion und nur eine primäre oder sekundäre Aminofunktion aufweisen. Besonders bevorzugt sind phosphatiertes Ethanolamin (Ethanolaminphosphat (NH₂-CH₂CH₂-O-PO₃H₂)), diphosphatiertes Diethanolamin (Diethanolamindiphosphat (NH-(CH₂CH₂-O-PO₃H₂)₂)) und/oder monophosphatiertes Diethanolamin (Diethanolaminmonophosphat (NH(CH₂CH₂-O-H)(CH₂CH₂-O-PO₃H₂)).
Insbesondere bevorzugt sind diphosphatiertes Diethanolamin und/oder monophosphatiertes Diethanolamin. Abhängig von der Reaktionsführung bei der Phosphatierung zur Herstellung der Edukte C) können auch Mischungen von zu einem verschiedenen Grad phosphatierten Aminoalkoholen, beispielsweise Mischungen von diphosphatiertem Diethanolamin und monophosphatiertem Diethanolamin (unphosphatierte Alkoholgruppe verbleibt) entstehen. Der Einsatz solcher, vorzugsweise in-situ hergestellten Edukte C) (ohne Isolierung der Edukte C)) ist aus wirtschaftlichen Gründen vorteilhaft, da Prozessstufen eingespart werden können.

Am meisten bevorzugt ist diphosphatiertes Diethanolamin. Diphosphatiertes Diethanolamin ist gegenüber monophosphatierten Edukten bevorzugt, da doppelt so viele Phosphorsäureestergruppen als Ankergruppen enthalten sind.

Es können als Edukt C) die phosphatierten Aminoalkohole gleich oder verschieden sein und unabhängig voneinander einer oder mehrere phosphatierte Typen von Aminoalkohol(en) verwandt werden.

### Verfahren der Alternative 1.):

Die Reaktionen von Edukt a) mit b) und auch die Reaktion von Edukt a) mit c-1) sind nukleophile aromatische Substitutionsreaktionen. Unter Abgang von Halogenwasserstoff entstehen bei Reaktion von a) mit b) polyalkylenglykolderivatisierte Triazine und bei Reaktion von a) mit c-1) aminoalkoholderivatisierte Triazine. Dementsprechend erhält man nach Reaktion von a) mit b) und c-1) die entsprechend als Polyalkylenglykol und Aminoalkohol derivatisierten Triazine, im Allgemeinen als Gemische.

Das Reaktionsprodukt aus der Reaktion von Edukt a) mit b) ist bevorzugt charakterisiert durch die Anknüpfung des Polyalkylenglykols durch eine Sauerstoffbindung (Polyalkylenglykolhaltiger Alkohol als Nukleophil b)), Schwefelbindung (Polyalkylenglykolhaltiges Mercaptan als Nucleophil b)) oder Aminobindung (Polyalkylenglykolhaltiges Amin als Nukleophil b)) an einem oder mehreren, bevorzugt einem oder zwei Kohlenstoffatomen des Triazinrings.

Bei der Reaktion von Edukt a) mit c-1) wird bevorzugt im Wesentlichen die reaktivere Aminofunktion der primären oder sekundären Aminoalkohole zur Reaktion kommen und dementsprechend entstehen bevorzugt die aminoalkoholderivatisierte Triazinderivate mit einer Aminobindung an einem oder mehreren Kohlenstoffatomen des Triazinrings und einer oder mehreren freien Hydroxygruppen. Die freien Hydroxygruppen aus dem Edukt c-1) stehen zur weiteren Reaktion mit den Phosphatierungsreagenzien c-2) zur Verfügung (bevorzugt in der Reaktionsstufe β -1).

Das folgende Reaktionsschema verdeutlicht beispielhaft die Reaktionsführung der ersten Reaktionsstufe α -1, für den Fall der Reaktion von 2,4,6- Trichlor - 1,3,5-Triazin mit einem hydroxyfunktionellen Polyalkylenglykolalkohol b) und anschließend mit Diethanolamin als Komponente c-1):

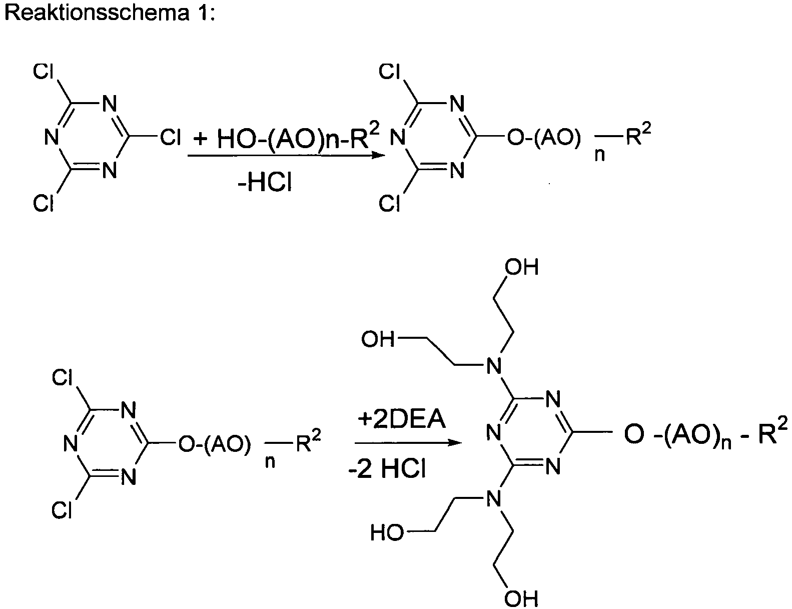

Die Anzahl der Wiederholungseinheiten n ist größer als 1 und liegt bevorzugt in den vorstehend beschriebenen Bereichen. R² ist gleich oder verschieden und unabhängig voneinander H und/oder ein Kohlenwasserstoffrest. Der Substituent A ist ein Alkylen und hat die vorstehend genannte Bedeutung. Als Rest R² ist ein Kohlenwasserstoffrest gegenüber H bevorzugt. Der Kohlenwasserstoffrest kann beispielsweise ein verzweigter oder unverzweigter aliphatischer Rest, ein aromatischer Rest, Arylrest oder sonstiger Kohlenwasserstoffrest sein. Besonders bevorzugt ist R² ein Alkylrest, insbesondere bevorzugt ein C₁- bis C₂₀- Alkylrest. Als Alkylreste sind C₁- bis C₄- Alkylreste bevorzugt, insbesondere Methylreste. Der Substituent A ist ein Alkylen und hat die vorstehend beschriebene Bedeutung.

Die Molverhältnisse der Edukte a) / b) / c-1) / c-2) sind bevorzugt im Bereich von 1 / 0.8 - 2.5 / 0.8 - 2.5 / 1 - 5, bevorzugt 1 / 0.9 - 2.3 / 1 - 2.5 / 2 - 5, insbesondere bevorzugt im Bereich von 1 / 1 - 2 / 1.5 - 2.5 / 2 - 4. Das Edukt a) wurde dabei als Konstante zu 1 gewählt.

Im Verfahren 1.) wird bevorzugt in einer ersten Reaktionsstufe α -1) das Edukt a) mit den Edukten b) und c-1) gleichzeitig zur Reaktion gebracht oder es wird in beliebiger Reihenfolge mit Edukt a) umgesetzt, das heißt zunächst a) mit b) und dann mit c-1) oder Edukt a) wird mit c-1) und dann mit b) umgesetzt. Die Umsetzung von Edukt a) mit Edukt b) und dann mit Edukt c-1) ist besonders bevorzugt. Die Umsetzungen erfolgen bevorzugt im alkalischen pH-Bereich, besonders bevorzugt bei einem pH-Wert größer als 9.

Das folgende Reaktionsschema verdeutlicht beispielhaft die Phosphatierungsreaktion (zweite Reaktionsstufe β -1) des entstandenen Zwischenprodukts mit dem Phosphatierungsreagenz Phosphorsäure:

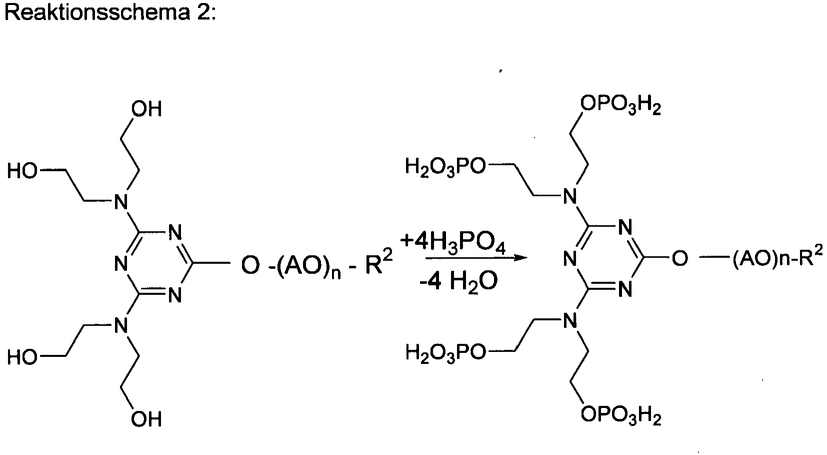

Die Substituenten R² und A haben die vorstehend genannten Bedeutungen.

### Verfahren der Alternative 2.):

Für die Reaktion von Edukt a) mit b) gilt in analoger Weise das bevorstehend Gesagte bezüglich der Art der Reaktion und der entstehenden Produkte. Das Edukt C) stellt ein schon teilweise oder ganz phosphatiertes primäres oder sekundäres Aminoalkohlprodukt dar. Aus diesem Grund ist ein Phosphatierungsschritt nicht mehr unbedingt notwendig.
Man erhält nach Reaktion von a) mit b) und C) die entsprechend als Polyalkylenglykol und phosphatierten Aminoalkohol derivatisierten Triazine, im Allgemeinen als Gemische. Das Verfahren der Alternative 1.) ist gegenüber der Alternative 2.) bevorzugt. Die Produkte des Falls B mit einer Triazinstruktureinheit sind gegenüber dem Fall A bevorzugt.

Das folgende Reaktionsschema 3 verdeutlicht die Reaktionsführung für den Fall der Reaktion eines 2,4,6- Trihalogen - 1,3,5-Triazins mit einem hydroxyfunktionellen Polyalkylenglykolalkohol b) und anschließend mit diphosphatiertem Diethanol als Komponente C):

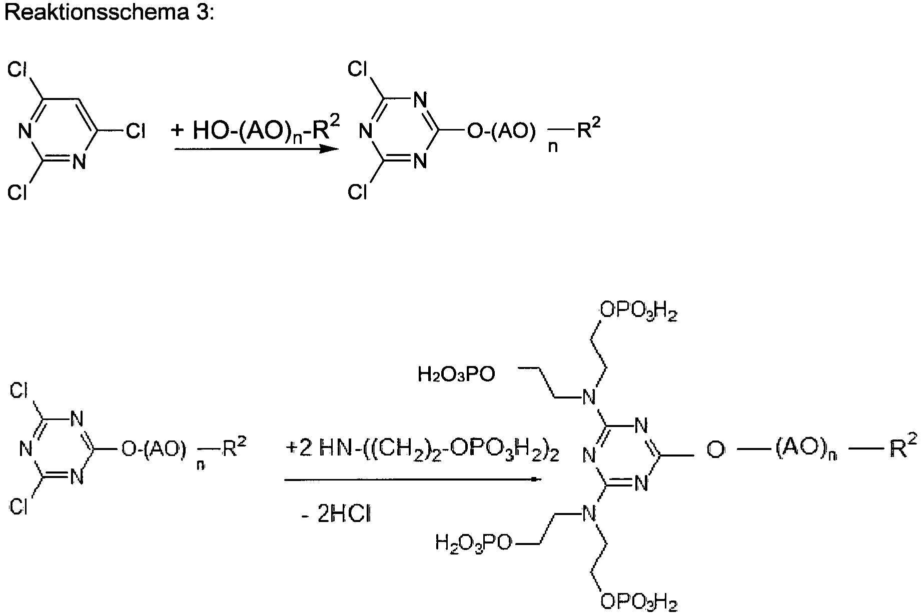

Die Substituenten R² und A haben die vorstehend genannten Bedeutungen.
Die Molverhältnisse der Edukte a) / b) / C) sind bevorzugt im Bereich von 1 / 0.8 - 2.5 / 0.8 - 2.5, bevorzugt im Bereich 1 / 0.9 - 2.3 / 0.9 - 2.3, besonders bevorzugt im Bereich von 1 / 1 - 2 / 1 - 2. Das Edukt a) wurde dabei als Konstante zu 1 gewählt.

Bei der Verfahrensalternative 2.) kann durch Verwendung des Edukts C) auf den Einsatz von c-1) und c-2) verzichtet werden, bzw. Edukt C) wird im Allgemeinen das Zwischenprodukt aus der Reaktion von c-1) und c-2) sein. Das Verfahren des Falls 2.) unter Einsatz der phosphatierten Aminoalkoholkomponente C) ist insbesondere bevorzugt zur gezielten Herstellung von Dispergiermitteln des Falls B mit nur einer Triazinstruktureinheit geeignet. Die Hydroxygruppen des c-1) reagieren in der Reaktion mit dem Phosphatierungsreagenz c-2) zu den Phosphorsäureestern C) ab. Eine Reaktion der Hydroxygruppen des Edukts c-1) in einer nukleophilen Substitutionsreaktion am Triazingerüst von a) ist damit ausgeschlossen und somit ist eine Ausbildung von Strukturen des Typs A mit mehreren Triazinstruktureinheiten vermeidbar. Insbesondere wenn zusammen mit monoaminofunktionellem C) nur monofunktionelle Nucleophile als Edukt b) eingesetzt werden, können bevorzugt keine Dispergiermittel mit mehreren Triazinstruktureinheiten entstehen, da dann keine möglicherweise als Vernetzer wirkende Polyfunktionalitäten vorliegen.

Bevorzugt ist also ein Verfahren zur Herstellung von Dispergiermitteln des Falls B mit einer Triazinstruktureinheit für anorganische Partikel, dadurch gekennzeichnet, dass das Edukt a) eines oder mehrere Trihalogentriazine, bevorzugt eines oder mehrere 2,4,6-Trihalogen-1,3,5 -Triazine ist, besonders bevorzugt 2,4,6-Trichlor-1,3,5 -Triazin ist, das Edukt b) eine oder mehrere mindestens eine Polyalkylenglykoleinheit umfassende, mit den Halogensubstituenten des 2,4,6-Trihalogen-1,3,5 - Triazins reagierende nucleophile Verbindung ist, wobei die nucleophile Verbindung nur einen mit den Halogensubstituenten des 2,4,6-Trihalogen-1,3,5 - Triazins reaktionsfähigen nucleophilen Rest umfasst, und
unabhängig voneinander einer oder mehrere an der oder den Hydroxyfunktion(en) phosphatierte, primäre und/oder sekundäre Aminoalkohol(e) C), bevorzugt phosphatierte, primäre und/oder sekundäre Alkanolamin(e), besonders bevorzugt phosphatierte, primäre und/oder sekundäre Alkanolamine, welche mehr als eine phophatierte Hydroxyfunktion und nur eine primäre oder sekundäre Aminofunktion aufweisen, insbesondere bevorzugt diphosphatiertes und/oder monophosphatiertes Diethanolamin, verwandt werden.

Grundsätzlich kann das Verfahren zur Herstellung der erfindungsgemäßen Dispergiermittel nach der Methode 1.) oder 2.) ausgeübt werden, es kann aber auch eine Kombination beider Verfahren erfolgen, beispielweise indem die Methode 1.) mit den Edukten c-1) und c-2) ausgeübt wird und zusätzlich das Edukt C) verwandt wird.

Bevorzugt wird nach der Lehre des abhängigen Anspruchs 12 in einer ersten Reaktionsstufe α -1) das Edukt a) mit den Edukten b) und c-1), bevorzugt bei alkalischen pH-Bedingungen, besonders bevorzugt bei einem pH-Wert größer als 9, umgesetzt und in einer zweiten Reaktionsstufe β -1) das aus der ersten Reaktionsstufe α -1) erhaltene Produkt mit einem Phosphatierungsmittel c-2) phosphatiert oder, dass alternativ bei der Verfahrensalternative 2.) das Edukt a) mit den Edukten b) und C) bei alkalischen pH-Bedingungen, bevorzugt bei einem pH Wert kleiner als 9 umgesetzt wird.

Die Trennung der beiden Reaktionsschritte (nukleophile Substitution mit c-1) im Alkalischen und Phosphatierung mit c-2) im Sauren) ist aufgrund der unterschiedlichen pH-Bereiche der beiden Reaktionen vorteilhaft. Bevorzugt wird das Phosphatierungsmittel c-2) als letzter Reaktionspartner nach Umsetzung von Edukt a) mit den Edukten b) und c-1) umgesetzt.

Der pH-Wert der Reaktionsmischung (beispielsweise der Reaktionsstufe α -1) ist bevorzugt bei 20 °C und einer Verdünnung der Reaktionsmischung mit destilliertem Wasser im Verhältnis 1 Teil Reaktionsmischung zu 100 Teilen destilliertes Wasser zu bestimmen.

Bevorzugt ist ein Verfahren zur Herstellung von Dispergiermitteln des Falls A für anorganische Partikel gemäß Anspruch 6, dadurch gekennzeichnet, dass Polyamine, Polyalkohole und/oder Polymercaptane als Edukte eingesetzt werden gemäß einer der allgemeinen Formeln (IIIa')

Q-(NH₂)ₖ, Q-(OH)ₖ,

und/oder Q-(SH)ₖ
wobei
k eine ganze Zahl größer als 1 ist, bevorzugt 2 bis 6, insbesondere bevorzugt 2 oder 3 ist,
Q ein beliebiger Kohlenwasserstoffrest ist, bevorzugt ein Alkylenrest, besonders bevorzugt ein Alkylenrest mit 2 bis 20 Kohlenstoffatomen,
und /oder Polyethylenamine gemäß der allgemeinen Formel (IIIb') NH₂-[(CH₂)₂-NH-]ₘ - (CH₂)₂-NH₂, wobei
m eine ganz Zahl von 1 bis 6 ist, bevorzugt ist m eine ganze Zahl von 1 bis 3.

Der Einsatz der Nukleophile gemäß einer der allgemeinen Strukturformeln (IIIa') und der Polyethylenamine gemäß der allgemeinen Strukturformel (IIIb') führt zu einer Bindungsausbildung zwischen zumindest zwei Triazinstruktureinheiten. Je nach den gewählten Einsatzmengen von polyfunktionellen Nukleophilen gemäß den allgemeinen Formeln (IIIa') und/oder (IIIb') kann der Grad der Verknüpfung zwischen den Triazineinheiten durch die polyfunktionellen Nukleophile gemäß den allgemeinen Formeln (IIIa') und/oder (IIIb') eingestellt werden.

Beispiele für die Edukte (IIIa') sind Polyamine wie Ethylendiamin, H₂N-CH₂-CH₂-NH₂, 1,3-Diaminopropan, H₂N-(CH₂)₃-NH₂ und/oder Hexamethylendiamin, H₂N-(CH₂)₆-NH₂. Ebenfalls ist Glycerin zu nennen.

Beispiele für (IIIb') sind Polyethylenamine wie Verbindungen der Reihe Diethylentriamin (m = 1, U = -N-H), Triethylentetramin (m = 2, U = -N-H) und/oder Tetraethylenpentamin (m = 3, U = -N-H).

Bevorzugt ist ein Verfahren zur Herstellung eines Dispergiermittels des Falls A gemäß Anspruch 7, welches mindestens eine Phosphorsäurediesterstruktureinheit enthält, gekennzeichnet dadurch, dass mit einem Phosphatierungsmittel c-2) ausgewählt aus Polyphosphorsäure, Phosphorpentachlorid und/oder POCl₃ phosphatiert wird, bevorzugt bei Temperaturen größer als 60 °C, besonders bevorzugt bei Temperaturen größer als 80 °C.

Insbesondere bevorzugt entspricht die Phosphorsäurediesterstruktureinheit der allgemeinen Formel (IV),

(IV) -O-PO(OH)-O-.

Bevorzugt wird der Verfahrensschritt der Phosphatierung im Wesentlichen in Abwesenheit von Wasser ausgeübt, besonders bevorzugt bei einem Wassergehalt kleiner als 0.1 Gew. %, jeweils bezogen auf die Summe der Massen aller Edukte.

Bevorzugt ist ein Verfahren, dadurch gekennzeichnet, dass bei der Verfahrensalternative 1.) in einer ersten Reaktionsstufe α -1)
das Edukt a) mit den Edukten b) und c-1), bevorzugt bei alkalischen pH-Bedingungen, besonders bevorzugt bei einem pH-Wert größer als 9, umgesetzt wird und in einer zweiten Reaktionsstufe β -1)
das aus der ersten Reaktionsstufe α -1) erhaltene Produkt mit einem Phosphatierungsmittel c-2) phosphatiert wird oder, dass alternativ bei der Verfahrensalternative 2.) das Edukt a) mit den Edukten b) und C) bei alkalischen pH-Bedingungen, bevorzugt bei einem pH Wert kleiner als 9 umgesetzt wird.

Das aus der ersten Reaktionsstufe α -1) erhaltene Zwischenprodukt ist im Allgemeinen ein Gemisch von Triazinen, welche in einer nukleophilen aromatischen Substitutionsreaktion am Kohlenstoff des Triazingerüsts mit den Edukten b) und c-1) substitutiert wurden.

Im Verfahrensfall 2.) kann das Edukt a) mit b) und C) gleichzeitig oder es kann das Edukt a) mit b) und C) nacheinander in beliebiger Reihenfolge umgesetzt werden.
Im Fall 2.) wird bevorzugt in einer ersten Reaktionsstufe das Edukt a) mit dem Edukt b) bei alkalischen pH-Bedingungen, bevorzugt bei einem pH-Wert größer als 9, umgesetzt. Dabei entsteht bevorzugt in einer nukleophilen Substitutionsreaktion am aromatischen Triazinring unter Abspaltung der entsprechenden Halogensäure ein polyalkylenglykolderivatisiertes Triazinderivat. Bevorzugt wird in einer zweiten Reaktionsstufe das aus der ersten Reaktionsstufe erhaltene Zwischenprodukt (polyalkylenglykolderivatisiertes Triazin) mit einem oder mehreren phosphatierten, primären oder sekundären Aminoalkohol(en) C) bei alkalischen pH-Bedingungen, bevorzugt bei einem pH-Wert größer als 9, umgesetzt.

Das beim Verfahren 2.) aus der ersten Reaktionsstufe α -2) erhaltene Zwischenprodukt ist bevorzugt charakterisiert durch die Anknüpfung des Polyalkylenglykols durch eine Sauerstoffbindung (Polyalkylenglykolhaltiger Alkohol als Nukleophil), Schwefelbindung (Polyalkylenglykolhaltiges Mercaptan als Nucleophil) oder Aminobindung (Polyalkylenglykolhaltiges Amin als Nukleophil) an einem oder mehreren Kohlenstoffatomen des Triazinrings.

Bevorzugt ist ein Verfahren, dadurch gekennzeichnet, dass im Verfahrensfall 1.) die erste Reaktionsstufe α -1) durch Reaktion von Edukt a) mit b) und anschließend c-1) bei alkalischen Bedingungen, bevorzugt bei einem pH-Wert größer als 9 durchgeführt wird.

Bevorzugt ist ein Verfahren zur Herstellung von Dispergiermitteln des Falls B) mit nur einer 1,3,5 -Triazinstruktureinheit gemäß der allgemeinen Strukturformel Va-1 , gekennzeichnet dadurch dass beim Verfahren 1.) in einer ersten Reaktionsstufe α -1) als a) ein 2,4,6-Trihalogen1,3,5 -Triazin mit b) einem Polyalkylenglykolalkohol, bevorzugt einem Methylpolyethylenglykol, und c-1) Diethanolamin umgesetzt wird und in der zweiten Reaktionsstufe β -1) das aus der ersten Reaktionsstufe α -1) erhaltene Reaktionsprodukt phosphatiert wird oder alternativ im Fall 2.) a) ein 2,4,6-Trihalogen1,3,5 - Triazin mit b) einem Polyalkylenglykolalkohol, bevorzugt einem Methylpolyethylenglykol, und C) diphosphatiertem Diethanol umgesetzt wird, wobei die allgemeine Strukturformel Va-1 entspricht

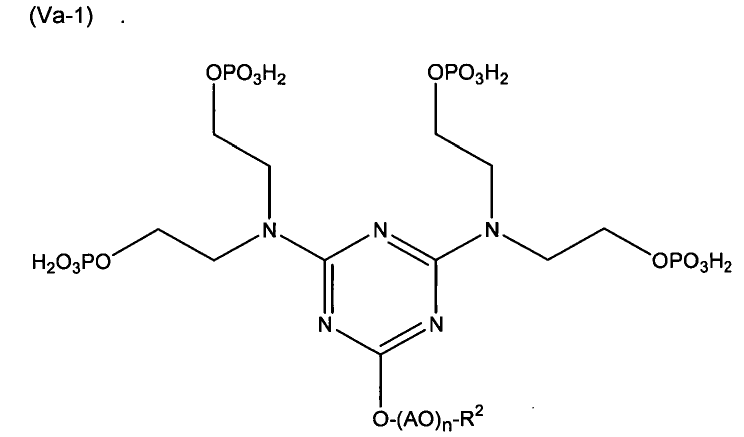

Die Substituenten R² und A haben in der Formel (Va-1) haben die vorstehend genannten Bedeutungen.

Die Erfindung betrifft auch Baustoffmischungen enthaltend eines oder mehrere Dispergiermittel und eines oder mehrere anorganische Bindemittel ausgewählt aus der Gruppe (Portland)zement, α -Calciumsulfat-Hemihydrat, β -Calciumsulfat-Hemihydrat, Calciumsulfat in Form von Anhydrit, Hüttensand, Flugasche, silica fume, Hochofenschlacke, natürliche Puzzolane und/oder gebrannter Ölschiefer, bevorzugt ist (Port)landzement mit einem Anteil größer 40 Gewichtsprozent bezogen auf die Gesamtmenge des anorganischen Bindemittels im anorganischen Bindemittel enthalten, Bevorzugt liegen die Dispergiermittel in getrockneter pulverförmiger Form vor. Entsprechende getrocknete Produkte sind erhältlich durch Sprühtocknung, Vakuumtrocknung oder Walzentrocknung der wässrigen Lösung.

Die Erfindung betrifft auch die Verwendung der Dispergiermittel als Wasserreduktionsmittel für eines oder mehrere hydraulische anorganische Bindemittel ausgewählt aus der Gruppe (Portland)zement, α -Calciumsulfat-Hemihydrat, β -Calciumsulfat-Hemihydrat, Calciumsulfat in Form von Anhydrit, Hüttensand, Flugasche, silica fume, Hochofenschlacke, natürliche Puzzolane und/oder gebrannter Ölschiefer, bevorzugt ist (Port)landzement mit einem Anteil größer 40 Gewichtsprozent bezogen auf die Gesamtmenge des anorganischen Bindemittels im anorganischen Bindemittel enthalten.

Dabei werden die Zusammensetzungen eingesetzt in Mengen von 0,01 Gew. -% bis 5 Gew.-%, bevorzugt in Mengen von 0,01 Gew.-% bis 2 Gew.-% jeweils bezogen auf die Gesamtmenge des anorganischen Bindemittels. Die erfindungsgemäßen Polymere können auch in Kombination mit anderen Zusatzmitteln wie Wasserreduzierern (wie Polycarboxylatether), Luftporenbildner (wie synthetische Tenside oder Naturharzseifen), Entschäumer, Verzögerer (wie Phosphate, Saccarose oder Stärkehydrolysate), Beschleuniger, Stabilisierer, Sedimentationsreduzierer, Schwindreduzierer sowie Betonfarben angewendet werden.

Die Erfindung betrifft auch die Verwendung der Dispergiermittel als Mittel zur Verringerung der Viskosität wasserhaltiger anorganischer Bindemittel, welche ausgewählt sind aus der Gruppe (Portland)zement, α -Calciumsulfat-Hemihydrat β -Calciumsulfat-Hemihydrat, Calciumsulfat in Form von Anhydrit, Hüttensand, Flugasche, silica fume, Hochofenschlacke, natürliche Puzzolane und/oder gebrannter Ölschiefer, bevorzugt ist (Port)landzement mit einem Anteil größer 40 Gewichtsprozent bezogen auf die Gesamtmenge des anorganischen Bindemittels im anorganischen Bindemittel enthalten. Dabei werden die Zusammensetzungen eingesetzt in Mengen von 0,01 Gew.-% bis 5 Gew.-%, bevorzugt in Mengen von 0,01 Gew.-% bis 2 Gew.-% jeweils bezogen auf die Gesamtmenge des anorganischen Bindemittels. Die erfindungsgemäßen Polymere können auch in Kombination mit anderen Zusatzmitteln wie Wasserreduzieren (wie Polycarboxylatether), Luftporenbildner (wie synthetische Tenside oder naturharzseifen), Entschäumer, Beschleuniger, Verzögerer (wie Phosphate, Saccarose oder Stärkehydrolysate), Stabilisierer, Sedimentationsreduzierer, Schwindreduzierer sowie Betonfarben angewendet werden. Vor allem bei relativ niedrigen Wasser zu Zementwerten (W/Z-Werten), bzw. bei relativ niedrigen Wasser zu Bindemittelwerten (W/B- Werten), führt das teilweise oder vollständige Ersetzen von herkömmlichen Kammpolymeren durch die erfindungsgemäßen Polymere zu einem deutlichen Absinken der Viskosität. Dabei ist der W/Z-Wert, beziehungsweise der W/B-Wert, bevorzugt kleiner als 0,5, besonders bevorzugt größer als 0,3 und kleiner als 0,5, insbesondere bevorzugt größer als 0.35 und kleiner als 0,5.

Die Erfindung betrifft auch die Verwendung der Dispergiermittel zur Steigerung der Frühfestigkeiten wasserhaltiger anorganischer Bindemittel, welche ausgewählt sind aus der Gruppe (Portland)zement, α -Calciumsulfat-Hemihydrat β -Calciumsulfat-Hemihydrat, Calciumsulfat in Form von Anhydrit, Hüttensand, Flugasche, silica fume, Hochofenschlacke, natürliche Puzzolane und/oder gebrannter Ölschiefer, bevorzugt ist (Port)landzement mit einem Anteil größer 40 Gewichtsprozent bezogen auf die Gesamtmenge des anorganischen Bindemittels im anorganischen Bindemittel enthalten. Dabei werden die Zusammensetzungen in Mengen von 0,01 Gew.-% bis 5 Gew.-%, bevorzugt in Mengen von 0,01 Gew.-% bis 2 Gew.-% jeweils bezogen auf die Gesamtmenge des anorganischen Bindemittels. Durch den Einsatz der erfindungsgemäßen Dispergiermittel können die Wasser/Zement - Werte reduziert werden und damit die gewünschten Enddruckfestigkeiten erhöht werden. Die besagte Reduzierung des Wasser/Zement - Wertes, bzw. Wasser/Bindemittel - Wertes ist durch den Einsatz der erfindungsgemäßen Dispergiermittel möglich, ohne eine nennenswerte Verzögerung der Zement-Hydratation und damit verbunden negative Einflüsse auf die Frühfestigkeiten in Kauf nehmen zu müssen. Die erfindungsgemäßen Dispergiermittel können, um eine noch weiter verbesserte Frühfestigkeitsentwicklung zu liefern, mit zusätzlichen Beschleunigern (wie Calciumchlorid oder Calciumnitrat) oder weitere Additive zur Steigerung der Früh-und Endfestigkeit (z.B. MEA, DEA, TEA, TIPA, THEED, DIHEIPA) kombiniert werden.

Die Erfindung betrifft auch die Verwendung der Dispergiermittel als Mahlhilfsmittel bei der Herstellung von Zement, bevorzugt bei der Vermahlung des Klinkers oder Klinkerblends zum Zement. Unter Klinkerblend wird bevorzugt eine Mischung aus Klinker und Ersatzstoffen wie Schlacke, Flugasche und/oder Puzzolane verstanden. Dabei werden die Zusammensetzungen in Mengen von 0,001% Gew.-% bis 5 Gew.-%, bevorzugt in Mengen von 0,01 Gew.-% bis 0,5 Gew.-%, jeweils bezogen auf den zu mahlenden Klinker oder Klinkerblend eingesetzt. Es ist möglich die erfindungsgemäßen Zusammensetzungen als Mahlhilfsmittel in Kugelmühlen oder auch in Vertikalmühlen einzusetzen. Die erfindungsgemäßen Zusammensetzungen können als Mahlhilfsmittel alleine oder auch in Kombination mit anderen Mahlhilfsmitteln verwendet werden, wie beispielsweise Mono-, Di-, Tri- und Polyglykole, Polyalkohole (zum Beispiel Glycerin verschiedener Reinheitsgrade, beispielsweise aus der Biodieselherstellung), Aminoalkohole (z.B. MEA, DEA, TEA, TIPA, THEED, DIHEIPA), organische Säuren und/oder deren Salze (z.B. Essigsäure und/oder deren Salze, Formiate, Gluconate), Aminosäuren, Zucker und Rückstände aus der Zuckerproduktion (z.B. Molasse, Vinasse), anorganische Salze (Chloride, Fluoride, Nitrate, Sulfate) und/oder organische Polymere (z.B. Polyethercarboxylate (PCEs)).

### Beispiele:

**Tabelle 1: Übersicht über die Synthesebeispiele**

| | | | Verfahrensalternative | | | |
|---|---|---|---|---|---|---|
| | | | 1 | | 2 | |
| Nr. | Edukt a) | Edukt b) | Edukt c-1 | Edukt c-2 | Edukt C | Base |
| 1 | 0,37 mol 2,4,6-Trichlor-1,3,5-Triazin | 0,25 mol Pluriol® A 2010 E | 1,25 mol Diethanolamin | 1,3 mol Polyphosphorsäure (>83% auf Basis von P₂O₅) | | NaOH |
| 2 | 0,37 mol 2,4,6-Trichlor-1,3,5-Triazin | 0,25 mol Pluriol® A 2010 E | 1,25 mol Diethanolamin | 1,3 mol Polyphosphorsäure (>83% auf Basis von P₂O₅) | | Ca(OH)₂ |
| 3 | 0,37mol 2,4,6-Trichlor-1,3,5-Triazin | 0,25 mol Pluriol® A 1020 E | 1,25 mol Diethanolamin | 1,3 mol Polyphosphorsäure (>83% auf Basis von P₂O₅) | | NaOH |
| 4 | 0,37 mol 2,4,6-Trichlor-1,3,5-Triazin | 0,25 mol Pluriol® A 3010 E | 1,25 mol Diethanolamin | 1,3 mol Polyphosphorsäure (>83% auf Basis von P₂O₅) | | NaOH |
| 5 | 0,37 mol 2,4,6-Trichlor-1,3,5-Triazin | 0,25 mol Pluriol® A 2010 E | | | 0,5 mol Aminono-Bis(Eth anolphosphat) | NaOH |
| 6 | 0,37 mol 2,4,6-Trichlor-1,3,5-Triazin | 0,25 mol Pluriol® A 2010 E | | | 0,5 mol Phosphocho l-amin | NaOH |
| 8 (V gl.) | 0,37 mol 2,4,6-Trichlor-1,3,5-Triazin | 0,25 mol Pluriol® A 2010 E | 1,25 mol Diethanolamin | | | NaOH |
| 9 | 0,25 mol 2,4,6-Trichlor-1,3,5-Triazin | 0,5 mol Pluriol® A 1020 E | 1,25 mol Diethanolamin | 1,3 mol Polyphosphorsäure (> 83% auf Basis von P₂O₅) | | NaOH |
| 10 | 0,37 mol 2,4,6-Trichlor-1,3,5-Triazin | 0,25 mol Pluriol® A 5010 E | 1,25 mol Diethanolamin | 1,3 mol Polyphosphorsäure (>83% auf Basis von P₂O₅) | | NaOH |
| 11 | 0,37 mol 2,4,6-Trichlor-1,3,5-Triazin | 0,25 mol Jeffamin® M 2070 (2000 g/mol) | 1,25 mol Diethanolamin | 1,3 mol Polyphosphorsäure (>83% auf Basis von P₂O₅) | | NaOH |

| | | | | | | |
|---|---|---|---|---|---|---|
| Pluriol® A E ist der BASF Markenname für Methylpolyethylenglykol. Die entsprechende Ziffer gibt das Molekulargewicht an. | | | | | | |

### Allgemeine Synthesevorschrift:

Die in Tabelle 1 angegebenen jeweiligen Mengen der Edukte b werden in 200 ml Dichlormethan gelöst und mit 11 g (0,275 mol) Natriumhydroxyd-Pulver versetzt. Bei 0° C wird die in der Tabelle angegebene Menge Edukt a zugegeben und die Lösung 1 h bei Raumtemperatur gerührt. Anschließend wird die Lösung 2 Stunden auf 60 °C erwärmt.
Verfahrensalternative 1: Es wird anschließend die in Tabelle 1 angegebene Menge Edukt c-1 zugetropft und die Lösung 6 h auf 60 °C gehalten. Die entstandene Suspension wird abfiltriert und die klare überstehende Lösung von Lösungsmittel befreit. Anschließend werden langsam die in Tabelle 1 beschriebene Mengen an Edukt c-2 langsam in die Schmelze (70 °C) zugetropft und 5 Stunden bei 60 °C nachgerührt. Die Substanz wird in Wasser gelöst und mit der entsprechenden (Erd)alkalibase auf einen pH - Wert von 5 bis 6 neutralisiert. Der Feststoffgehalt wird auf 30 % eingestellt. Verfahrensalternative 2: Es werden die angegebenen Mengen an Edukt C zugegeben und 6 Stunden bei 60 °C gerührt. Der Feststoffgehalt wird ebenfalls auf 30 % eingestellt.

Das Edukt Diethanolaminophosphat wurde analog der Vorschrift in der DE10 2005 022 843 A1 hergestellt.

### Kalorimetrischer Vergleich der Hydratationswärmen

Kalorimetriemessungen wurden durchgeführt mit 3 Gew. % Additiv - bezogen auf den Feststoffgehalt - auf 100 g Zement durchgeführt. Die Versuche wurden in Zementleim mit einem W/Z Verhältnis von 0,5 getestet. Es kann gezeigt werden, dass die erfindungsgemäßen Dispergiermittel die Frühfestigkeitsentwicklung nur ganz gering beeinflussen im Vergleich zum Blank ohne Zusatzmittel. Die Vergleichsprodukte Optima®100 und Glenium® B233 verzögern die Frühfestigkeitsentwicklung dagegen relativ stark. Kurzkettige Polyalkylenglykolseitenketten (Proben Nr. 1 und 3) zeigen eine ganz besonders gute Frühfestigkeitsentwicklung.

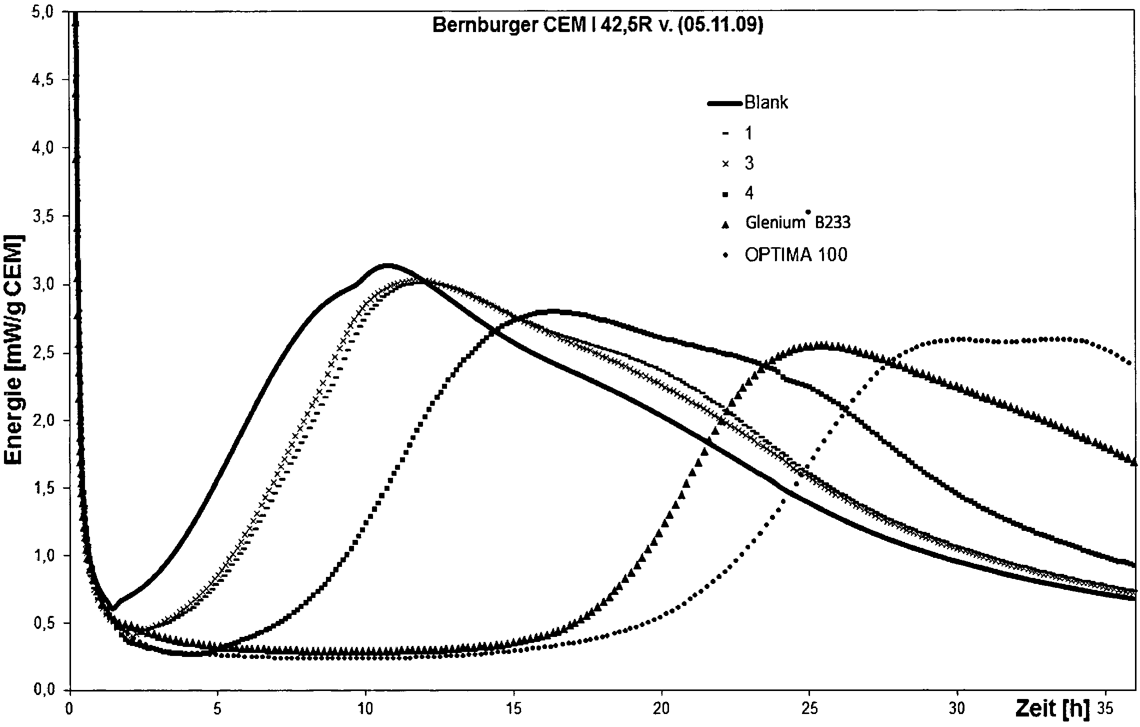

### Mörteltests

Die Mörteltests wurden entsprechend der Norm DIN EN 1015-3 durchgeführt.

**Tabelle 2: Ausbreitmaße der erfindungsgemäßen Polymere im Mörteltest**

| | | | | | Ausbreitmaß Mörtel (cm) | | |
|---|---|---|---|---|---|---|---|
| Zement | Zusatzmittel | W/Z | Temperatur | Dosierung | 0 min | 10 min | 30 min |
| Bernburg 42,5R | --------------- | 0,54 | 22,7 | 0,00% | 23,9 | 22,7 | |
| Bernburg 42,5R | Optima® 100 (Vgl.) | 0,46 | 24,0 | 0,40% | 24,2 | 23,3 | 22,6 |
| Bernburg 42,5R | 1 | 0,46 | 23,9 | 0,20% | 24,0 | 22,2 | 21,2 |
| Bernburg 42,5R | 2 | 0,46 | 23,9 | 0,20% | 23 | 22 | 21,3 |
| Bernburg 42,5R | 3 | 0,46 | 23,6 | 0,40% | 23,2 | 22 | 21,5 |
| Bernburg 42,5R | 4 | 0,46 | 24.0 | 0,30% | 24,3 | 23,3 | 22,1 |
| Bernburg 42,5R | 8 - Vergleich | 0,46 | 23,4 | 0,40% | 20 | | |
| Bernburg 42,5R | 9 | 0,46 | 23,8 | 0,40% | 23,5 | 22,2 | 21,3 |
| Bernburg 42,5R | 10 | 0,46 | 24,1 | 0,40% | 23,4 | 22,4 | 21,2 |
| Bernburg 42,5R | 11 | 0,46 | 23,7 | 0,27% | 24,7 | 23,8 | 22,5 |
| Bernburg 42,5R | Glenium® B233 (Vgl.) | 0,43 | 18,3 | 0,32% | 23,3 | 24,6 | 26,2 |
| Bernburg 42,5R | 1 | 0,43 | 19,7 | 0,40% | 23,2 | 20,7 | |
| Karlstadt 42,5R | Glenium® B233 (Vgl.) | 0,45 | 18,2 | 0,35% | 23,2 | 25,4 | 28,8 |
| Karlstadt 42,5R | 1 | 0,45 | 19,7 | 0,50% | 23,7 | 22,2 | 20,9 |
| Karlstadt 42,5R | Optima® 100 (Vgl.) | 0,46 | 19,0 | 0,40% | 19,9 | | |

| | | | | | | | |
|---|---|---|---|---|---|---|---|
| Die verwendeten Zemente sind von der Firma Schwenk bezogen (alle CEM I). W/Z = Wasser/Zement Verhältnis | | | | | | | |

Anhand dieser Ergebnisse wird deutlich, dass der Wasserbedarf, der notwendig ist, um einen Mörtel auf ein bestimmtes Ausbreitmaß zu verflüssigen, durch den Zusatz dieser Polymere drastisch verringert wird. Verzichtet man auf die Zugabe des Fließmittels, so wird ein Wasser-Zementverhältnis (W/Z) von 0,54 benötigt um ein Ausbreitmaß von 23,9 cm zu erhalten. Bei Verwendung eines alkalireichen Zementes (Karlstadt) tritt die gute Dispergiereigenschaft besonders heraus. Im Vergleich zu Optima® 100 ist bei einigen der erfindungsgemäßen Polymere eine deutliche Reduktion der erforderlichen Dosis um auf ein ähnliches Ausbreitmaß zu kommen, zu beobachten. Das Vergleichsbeispiel 8 ohne Phosphatgruppen in der Struktur ermöglicht nur ein relativ geringes anfängliches Ausbreitmaß auch bei relativ hoher Dosierung. Die Vergleichsbeispiele mit Glenium®B233 aus der Polycarboxylatetherchemie sind in ihrer Wirkung mit den erfindungsgemäßen Polymeren annähernd vergleichbar, bei besserem slump-Erhalt.

**Tabelle 3: Festigkeitsentwicklung im Mörtel**

| | | | | Ausbreitmaß | | Druckfestigkeit [N/mm²] | |
|---|---|---|---|---|---|---|---|
| Zement | Additiv | W/Z | Dosierung | 0min | 10min | 1Tag | 28 Tage |
| Bernburg 42,5R | Blank | 0,54 | ---- | 24,5 | 23,5 | 17,67 | |
| | Glenium b233 | 0,45 | 0,095% | 24,5 | 22,5 | 23,92 | 63.73 |
| | Optima® 100 | 0,45 | 0,400% | 23,9 | 23,1 | 8,69 | 62,53 |
| | 1 | 0,45 | 0,170% | 23,9 | 23,1 | 23,83 | 65.02 |

Die Festigkeiten des entstehenden Mörtels wurden nach DIN EN 196 - 1 durchgeführt. Hier zeigt sich, dass der Einsatz dieser erfindungsgemäßen Polymerklasse einen positiven Einfluss auf die 1 Tages und 28 Tagesfestigkeiten hat. Vor allem eine erhöhte 1-Tagesfestigkeit ist für einen schnellen Baufortschritt von besonderer Bedeutung.

### Betontests zur Bestimmung des Wasserreduktionsvermögens und der Festigkeiten

Als Zement wurde zur Bestimmung der Wasserreduktion ein Bernburg CEM I Zement verwendet.
Der Slump-Wert ist ein Maß dafür, wie stark der Betonkuchen nach dem Abheben des Metallkonus kollabiert (Höhendifferenz zwischen der Oberkante des Metallkonus und der Höhe des Betonkuchens nach dem Abziehen der Metallform). Der Slump-flow (Spread) entspricht dem Basisdurchmesser des Betonkuchens nach dem Zusammensacken.

Das Ausbreitmaß erhält man, indem der Ausbreittisch, gemäß DIN EN 12350 - 5, durch 15-maliges Anheben und Aufstoßen erschüttert wird. Die durch das Klopfen auftretenden Scherkräfte bewirken ein weiteres Ausbreiten des Betons. Der Durchmesser des Betonkuchens nach dem Klopfen wird als Ausbreitmaß bezeichnet.

**Tabelle 4: Festigkeitsentwicklung im Beton**

| Bernburg CEM I 42,5 R | | | Ausbreitmaß [cm] | | Slump [cm] | | Druckfestigkeit [N/mm²] |
|---|---|---|---|---|---|---|---|
| Additiv | W/Z | Dosierung [%] | 0 min | 10 min | 0 min | 10 min | 24 Stunden |
| Blank | 0,55 | -- | 47,5 | 45,5 | 14 | 12 | 14,35 |
| OPTIMA® 100 | 0,45 | 0,60 | 58 | 58 | 22 | 23 | Nicht messbar |
| Nr. 1 | 0,45 | 0,40 | 58 | 51,5 | 22,5 | 18 | 25,05 |

An diesem Beispiel zeigt sich, dass die Ergebnisse aus den Mörteltests sich in den Betontests widerspiegeln. Die Frühfestigkeit eines mit der erfindungsgemäßen Struktur (Nr. 1) dispergierten Betons besitzt einen deutlich höheren Wert im Vergleich zu beispielsweise OPTIMA® 100. Zu diesen Bedingungen ist die Festigkeit nach 24 Stunden noch nicht messbar, da der Beton noch fließfähig ist.

**Tabelle 5: Festigkeitsentwicklung im Beton mit Kalksteinfüller**

| Montselice A/LL + Kalksteinmehl als Füllmaterial | | | Druckfestigkeit [N/mm²] |
|---|---|---|---|
| Additiv | W/Z | Dosierung [%] | 24 h |
| 1 | 0,48 | 0,78 | 25,3 |
| 4 | 0,48 | 1,1 | 27,7 |
| Glenium® B233 | 0,48 | 0,34 | 29,5 |
| OPTIMA® 100 | 0,48 | 0,78 | 1,9 |
| Blank | 0,55 | | 14,35 |

| | | | |
|---|---|---|---|
| Mit zunehmender Länge der Seitenkette (steigende Kettenlänge des Polyalkylenglykols in der Reihenfolge der erfindungsgemäßen Beispiele 3, 1, 4) steigt die Eintagesfestigkeit an. | | | |

### Betontests zur Bestimmung der plastischen Viskositäten des Frischbetons

Als Zement für die Viskositäten wurde ein CEM II/A-LL 42,5R aus dem Zementwerk Montselice verwendet.

Zusammensetzung des Betons: 400 kg Zement, Füller: 50 kg Kalksteinmehl, Temperatur: 20 °C.

Der Slump-Wert ist ein Maß dafür, wie stark der Betonkuchen nach dem Abheben des Metallkonus kollabiert (Höhendifferenz zwischen der Oberkante des Metallkonus und der Höhe des Betonkuchens nach dem Abziehen der Metallform). Der Slump-flow entspricht dem Basisdurchmesser des Betonkuchens nach dem Zusammensacken.
Das Ausbreitmaß erhält man, indem der Ausbreittisch, gemäß dem o.g. DIN-Verfahrens, durch 15-maliges Anheben und Aufstoßen erschüttert wird. Die durch das Klopfen auftretenden Scherkräfte bewirken ein weiteres Ausbreiten des Betons. Der Durchmesser des Betonkuchens nach dem Klopfen wird als Ausbreitmaß bezeichnet.

Wie schon im Mörtel zeigt der Beton durch Zugabe des erfindungsgemäßen Polymers eine deutlich bessere Verarbeitbarkeit.

Für den bestimmungsgemäßen Gebrauch spielt, abgesehen von der Verflüssigung, auch die Viskosität des Frischbetons eine bedeutende Rolle. Die Viskosität ist ein Maß für die Pump-und Verarbeitbarkeit des Frischbetons. Niedrigere Werte führen zu einer besseren Verarbeitbarkeit und damit auch zu einer besseren Pumpbarkeit (Gleitrohr-Rheometer: Ein Verfahren zur Bestimmung der Fließeigenschaften von Dickstoffen in Rohrleitungen, Dissertation von Dr. Knut Jens Kasten, TU Dresden. Shaker Verlag; 1. Aufl. (Juli 2010)).
Kommerzielle Superverflüssiger sind oft Kammpolymere mit Polyethylenglykolseitenketten (PEG Seitenketten), wie beispielsweise Glenium® B233. Diese Fließmittel führen jedoch bei Anwendung als Wasserreduzierer zu hohen plastischen Viskositäten des Frischbetons. Dadurch wir die Pumpbarkeit und die Plazierbarkeit des Frischbetons in Formen erschwert.

Die plastischen Viscositäten des Frischbetons wurden in einem IKAR-Rheometer (**Referenz:** E.P. Koehler, D.W. Fowler (2007). " ICAR Mixture Proportioning Procedure for SCC" International Center for Aggregates Research, Austin, TX.) gemessen.

Um vergleichbare Ergebnisse zu erhalten, wird die Menge an Additiv so dosiert, dass alle Frischbetone einen Slump von 23 cm nach 5 Minuten gemäß DIN EN 12350 aufweisen.
Die Wasser-Zement-Verhältnisse werden auf 0,48 eingestellt und die Messung wird nach 5 Minuten durchgeführt.

**Tabelle 6: Viskositäten der erfindungsgemäßen Fließmittel im Beton**

| Montselice A/LL + Kalksteinmehl | | Plastische Viskosität |
|---|---|---|
| Additiv | W/Z | Pa*s |
| 1 | 0,48 | 120,4 |
| 3 | 0,48 | 76,9 |
| 4 | 0,48 | 136,8 |
| OPTIMA® 100 | 0,48 | 106,8 |
| Glenium® B233 | 0,48 | 142,1 |

Die Viskosität des Blanks kann nicht adäquat gemessen werden, da hier sonst deutlich höhere W/Z-Werte verwendet werden müssten.

Die erfindungsgemäßen Dispergiermittel verflüssigen Betone und ermöglichen es vor allem niedrige Viskositäten des Betons zu erzielen. Längere Seitenketten in den erfindungsgemäßen Polymeren führen zu einem leichten Ansteigen der Viskosität des Frischbetons. Die Viskositäten liegen jedoch in jedem Fall unter denen der Polycarboxylatether. Wie aus den Werten ersichtlich ist, liefern die erfindungsgemäßen Polymere eine gute Möglichkeit, Frischbetone mit niedrigen W/Z-Werten und niedrigen Viskositäten herzustellen.

### Ergebnisse der Mahlung von Klinker zur Herstellung von Zement:

Bei den Mahlungen wird das Additiv Nr. 1 der Tabelle 1 in flüssiger Form in einer Dosierung von 500 ppm (Dosierung ist bezogen auf den Feststoffgehalt) zu 10 kg Klinker (Klinker Mergelstetten) gegeben und bei einer Temperatur von 120 °C 80 Minuten lang gemahlen. Als Mühle wird eine beheizbare Laborkugelmühle von Cemtec (Labbas1) verwendet. Zum Vergleich dient eine Mahlung des gleichen Klinkers unter analogen Bedingungen, aber ohne Zusatz eines Additivs (Blank).
Im Vergleich zum Blank kann im Experiment eine Erhöhung des Blaine-Wertes und ein Anstieg der Frühfestigkeiten nach 24 Stunden gefunden werden. Durch die feiner vermahlenen Partikel (höherer Blaine Wert) lässt sich auch die bessere Festigkeitsentwicklung erklären. Beide Messparameter beweisen die Effizienz der erfindungsgemäßen Dispergiermittel als Mahlhilfsmittel.
Die Mörteltests wurden mit dem nach obenstehenden Verfahren hergestellten Zement bei einem W/Z-Wert von 0,5 und einem Sand/Zement-Wert von 3 durchgeführt. Weitere Additive wurden nicht zugegeben. Die Festigkeiten und Ausbreitmaße wurden nach den Normen DIN EN 1015-3 und DIN EN 196 - 1 bestimmt.

| | Blaine [cm²/g] | Ausbreitmaß nach 4 min | Biegezugfestigkeit nach 24 h | Druckfestigkeit nach 24 h |
|---|---|---|---|---|
| Blank (Vgl.) | 3907 | 20,2 cm | 2,87 N/mm² | 13,05 N/mm² |
| Nr. 1 | 4252 | 20,4 cm | 3,29 N/mm² | 13,54 N/mm² |

## Patentansprüche

1. Dispergiermittel für anorganische Partikel, bevorzugt für anorganische Bindemittel, besonders bevorzugt für hydraulische Bindemittel, welches folgende Struktureinheiten enthält
i) mindestens eine Triazinstruktureinheit, bevorzugt mindestens eine 1,3,5 - Triazinstruktureinheit, wobei der Fall mehrerer Triazinstruktureinheiten als Fall A und der Fall einer Triazinstruktureinheit als Fall B bezeichnet werden soll, im Fall A sind bevorzugt 2 bis 6, besonders bevorzugt 2 bis 4 und insbesondere bevorzugt 2 Triazinstruktureinheiten enthalten,
ii) mindestens eine Polyalkylenglykolstruktureinheit, bevorzugt eine bis 4, besonders bevorzugt eine oder zwei Polyalkylenglykolstruktureinheiten, insbesondere bevorzugt eine Polyalkylenglykolstruktureinheit,
iii) und mindestens zwei Phosphorsäureesterstruktureinheiten, bevorzugt sind 2 bis 10, besonders bevorzugt 2 bis 6 und insbesondere bevorzugt 2 bis 4 Phosphorsäureesterstruktureinheiten enthalten, **dadurch gekennzeichnet, dass** im Fall A mindestens eine der Triazinstruktureinheiten an mindestens einem Kohlenstoffatom eines oder mehrerer aromatischer Triazinringe, bevorzugt an einem oder zwei der Kohlenstoffatome eines oder mehrerer aromatischer Triazinringe, unabhängig voneinander mit einem Substituenten ausgewählt aus den allgemeinen Formeln (IIa) und/oder (IIb) substituiert ist, oder
im Fall B die Triazinstruktureinheit an mindestens einem Kohlenstoffatom des aromatischen Triazinrings, bevorzugt an einem oder zwei der Kohlenstoffatome des aromatischen Triazinrings, unabhängig voneinander mit einem Substituenten ausgewählt aus den allgemeinen Formeln (IIa) und/oder (IIb) substituiert ist, wobei in den Fällen A und B jeweils die allgemeinen Formeln
(IIa) -N-(CH₂CH₂-O-PO₃H₂)₂
und
(IIb) -NH-CH₂CH₂-O-PO₃H₂
sind.

2. Dispergiermittel nach Anspruch 1, **dadurch gekennzeichnet, dass** im Fall A mindestens eine der Triazinstruktureinheiten an mindestens einem Kohlenstoffatom eines oder mehrerer aromatischer Triazinringe, bevorzugt an einem oder zwei der Kohlenstoffatome eines oder mehrerer aromatischer Triazinringe unabhängig voneinander mit einem Substituenten ausgewählt aus -N-R(-R¹), -S-R und/oder -O-R substituiert ist, oder
im Fall B die Triazinstruktureinheit an mindestens einem Kohlenstoffatom des aromatischen Triazinrings, bevorzugt an einem oder zwei der Kohlenstoffatome des aromatischen Triazinrings, unabhängig voneinander mit einem Substituenten ausgewählt aus N-R(-R¹), -S-R und/oder -O-R substituiert ist, wobei im Fall A wie auch im Fall B R jeweils gleich oder verschieden ist und unabhängig voneinander definiert ist als ein mindestens eine Polyalkylenglykolstruktureinheit umfassender Rest und wobei R¹ gleich oder verschieden ist und unabhängig voneinander definiert ist als H, C₁- bis C₂₀- Alkylrest oder ein eine Polyalkylenglykolstruktureinheit umfassende Struktureinheit, bevorzugt H.

3. Dispergiermittel nach Anspruch 2, **dadurch gekennzeichnet, dass** der Substituent an der Triazinstruktureinheit oder die Substituenten an den Triazinstruktureinheiten -O-R ist oder sind, wobei R gleich oder verschieden ist und unabhängig voneinander definiert ist als ein mindestens eine Polyalkylenglykolstruktureinheit umfassender Rest.

4. Dispergiermittel nach einem der Ansprüche 1 bis 3, **dadurch gekennzeichnet, dass** mindestens ein eine Polyalkylenglykolstruktureinheit umfassender Rest der allgemeinen Formel
(I) -(AO)ₙ-R²
in dem Dispergiermittel enthalten ist,
wobei A ein Alkylen mit 2 bis 18 Kohlenstoffatomen ist, bevorzugt ist A zu mindestens 60 mol % ein Alkylen mit 2 Kohlenstoffatomen, insbesondere bevorzugt zu mindestens 80 mol % ein Alkylen mit 2 Kohlenstoffatomen, wobei die Angaben in mol % jeweils bezogen sind auf die Gesamtmolzahl aller Struktureinheiten (AO)ₙ im Dispergiermittel,
n ist eine ganze Zahl von 2 bis 500, bevorzugt 5 bis 300, besonders bevorzugt 15 bis 200, insbesondere bevorzugt 20 bis 80,
R² ist gleich oder verschieden und unabhängig voneinander H und/oder ein Kohlenwasserstoffrest.

5. Dispergiermittel nach einem der Ansprüche 1 bis 4, **dadurch gekennzeichnet, dass** das Gewichtsverhältnis der Triazinstruktureinheit(en) i) zu den Phosphorsäureesterstruktureinheiten iii) im Dispergiermittel zwischen 1/4.5 und 1/12, bevorzugt zwischen 1/5 und 1/10, insbesondere bevorzugt zwischen 1/6 und 1/9.5 ist.

6. Dispergiermittel des Falls A nach einem der Ansprüche 1 bis 5, **dadurch gekennzeichnet, dass** eine oder mehrere, mindestens zwei Triazinstruktureinheiten verbindende Struktureinheit(en) der allgemeinen Formel (IIIa) und/oder (IIIb) enthalten ist oder sind und die allgemeinen Formeln der Struktureinheiten (IIIa) und (IIIb) sind
(IIIa) Q-(T-Triazin)ₖ,
wobei
k eine ganze Zahl größer als 1 ist, bevorzugt 2 bis 6, insbesondere bevorzugt 2 oder 3 ist,
T O, -N-H oder S ist und
Q ein beliebiger Kohlenwasserstoffrest ist, bevorzugt ein Alkylenrest, besonders bevorzugt ein Alkylenrest mit 2 bis 20 Kohlenstoffatomen, insbesondere bevorzugt ist Q ein Ethylenrest und T ist - N-H- oder O,
(IIIb) (Triazin)-U-[(CH₂)₂-N(V)-]ₘ - (CH₂)₂-U-(-Triazin),
wobei
m eine ganz Zahl von 1 bis 6 ist, bevorzugt ist m eine ganze Zahl von 1 bis 3,
U ist gleich oder verschieden und unabhängig voneinander O, S und/oder -N-H, bevorzugt ist U -N-H,
V ist H und/oder Triazin.

7. Dispergiermittel des Falls A nach einem der Ansprüche 1 bis 6, **dadurch gekennzeichnet, dass** mindestens eine Phosphorsäurediesterstruktureinheit im Dispergiermittel enthalten ist, bevorzugt entspricht die Phosphorsäurediesterstruktureinheit der allgemeinen Formel (IV),
(IV) -O-PO(OH)-O-
besonders bevorzugt ist eine mindestens zwei Triazinstruktureinheiten, bevorzugt 1,3,5-Triazinstruktureinheiten, verbindende Struktur der allgemeinen Formel (IVa) im Dispergiermittel enthalten,
(IVa) (Triazin)-N(W)-(CH₂)₂-O-PO(OH)-O-(CH₂)₂-N(W)-(Triazin),
wobei W unabhängig voneinander -CH₂CH₂-O-PO₃H₂ und/oder H ist.

8. Dispergiermittel des Falls A nach einem der Ansprüche 1 bis 7, **dadurch gekennzeichnet, dass** zwei Triazinstruktureinheiten enthalten sind, eine oder zwei Polyalkylenglykolstruktureinheiten enthalten sind und 3 bis 6 Phosphorsäureesterstruktureinheiten enthalten sind.

9. Dispergiermittel des Falls B nach einem der Ansprüche 1 bis 5, wobei nur eine Triazinstruktureinheit enthalten ist, **dadurch gekennzeichnet, dass** eine oder zwei Polyalkylenglykolstruktureinheiten und zwei bis vier Phosphorsäureesterstruktureinheiten enthalten sind, bevorzugt liegen bei Anwesenheit einer Polyalkylenglykolstruktureinheit zwei bis vier Phosphorsäureesterstruktureinheiten vor, besonders bevorzugt liegen bei Anwesenheit von zwei Polyalkylenglykolstruktureinheiten zwei Phosphorsäureesterstruktureinheiten vor.

10. Dispergiermittel des Falls B nach Anspruch 9, **dadurch gekennzeichnet, dass** das Dispergiermittel der Struktur (Va) oder (Vb) entspricht, wobei 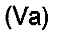 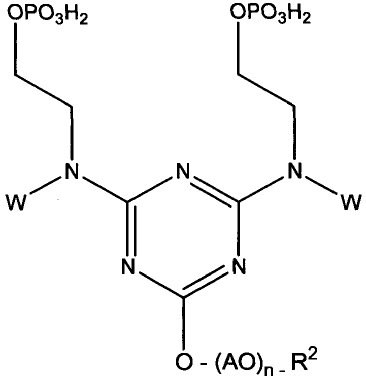 ist und 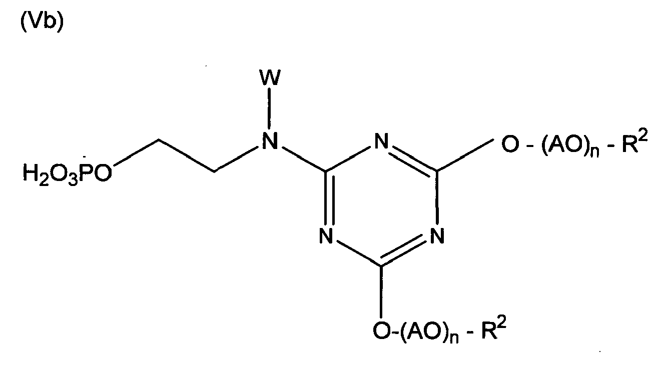 ist, wobei jeweils in den allgemeinen Formeln (Va) und (Vb) R² gleich oder verschieden ist und unabhängig voneinander H und/oder ein Kohlenwasserstoffrest ist und W in Formel (Va) unabhängig voneinander -CH₂CH₂-O-PO₃H₂ und/oder H ist, in Formel (Vb) ist W -CH₂CH₂-O-PO₃H₂.

11. Verfahren zur Herstellung von Dispergiermitteln für anorganische Partikel gemäß einem der Ansprüche 1 bis 10, **dadurch gekennzeichnet, dass**
1.) folgende Edukte verwandt werden
a) eines oder mehrere Trihalogentriazine, bevorzugt 2,4,6-Trihalogen-1,3,5 - Triazin, insbesondere bevorzugt 2,4,6-Trichlor-1,3,5 - Triazin,
b) eine oder mehrere mindestens eine Polyalkylenglykoleinheit umfassende, mit den Halogensubstituenten des Trihalogentriazins reagierende Verbindung, bevorzugt nucleophile Verbindung, besonders bevorzugt umfasst die Verbindung nur einen mit den Halogensubstituenten des Trihalogentriazins reaktionsfähigen nucleophilen Rest,
c-1) eine oder mehrere Verbindung(en) unabhängig voneinander ausgewählt aus primären und/oder sekundären Aminoalkoholen, bevorzugt ausgewählt aus primären und/oder sekundären Alkanolaminen, besonders bevorzugt aus primären und/oder sekundären Alkanolaminen, welche mehr als eine Hydroxyfunktion und nur eine primäre oder sekundäre Aminofunktion aufweisen, insbesondere bevorzugt Diethanolamin,
und
c-2) mindestens ein Phosphatierungsmittel, bevorzugt ein Phosphatierungsmittel zur Phosphatierung von Hydroxyfunktionen, besonders bevorzugt ein Phosphatierungsmittel ausgewählt aus Phosphorsäure, Phosphorpentoxid, Phosphorpentachlorid, POCl₃ und/oder Polyphosphorsäure, bevorzugt ist Polyphosphorsäure,
oder alternativ
2.) dass die Edukte a) und b) verwandt werden und unabhängig voneinander einer oder mehrere an der oder den Hydroxyfunktion(en) phosphatierte, primäre und/oder sekundäre Aminoalkohol(e) C), bevorzugt phosphatierte, primäre und/oder sekundäre Alkanolamin(e), besonders bevorzugt phosphatierte, primäre und/oder sekundäre Alkanolamine, welche mehr als eine phosphatierte Hydroxyfunktion und nur eine primäre oder sekundäre Aminofunktion aufweisen, insbesondere bevorzugt diphosphatiertes und/oder monophosphatiertes Diethanolamin, verwandt werden.

12. Verfahren nach Anspruch 11, **dadurch gekennzeichnet, dass** bei der Verfahrensalternative 1.) in einer ersten Reaktionsstufe α -1)
das Edukt a) mit den Edukten b) und c-1), bevorzugt bei alkalischen pH-Bedingungen, besonders bevorzugt bei einem pH-Wert größer als 9, umgesetzt wird
und in einer zweiten Reaktionsstufe β -1)
das aus der ersten Reaktionsstufe α -1) erhaltene Produkt mit einem Phosphatierungsmittel c-2) phosphatiert wird oder, dass alternativ bei der Verfahrensalternative 2.) das Edukt a) mit den Edukten b) und C) bei alkalischen pH-Bedingungen, bevorzugt bei einem pH Wert kleiner als 9 umgesetzt wird.

13. Verfahren nach Anspruch 12, **dadurch gekennzeichnet, dass** im Verfahrensfall 1.) die erste Reaktionsstufe α -1) durch Reaktion von Edukt a) mit b) und anschließend c-1) bei alkalischen Bedingungen, bevorzugt bei einem pH-Wert größer als 9 durchgeführt wird.

14. Verfahren nach einem der Ansprüche 11 bis 13 zur Herstellung von Dispergiermitteln des Falls B) mit nur einer 1,3,5 -Triazinstruktureinheit gemäß der allgemeinen Strukturformel Va-1, **gekennzeichnet dadurch dass** beim Verfahren 1.) in einer ersten Reaktionsstufe α -1) als a) ein 2,4,6-Trihalogen1,3,5 -Triazin mit b) einem Polyalkylenglykolalkohol, bevorzugt einem Methylpolyethylenglykol, und c-1) Diethanolamin umgesetzt wird und in der zweiten Reaktionsstufe β -1) das aus der ersten Reaktionsstufe α -1) erhaltene Reaktionsprodukt phosphatiert wird oder alternativ im Fall 2.) a) ein 2,4,6-Trihalogen1,3,5 -Triazin mit b) einem Polyalkylenglykolalkohol, bevorzugt einem Methylpolyethylenglykol, und C) diphosphatiertem Diethanol umgesetzt wird, wobei die allgemeine Strukturformel Va-1 entspricht

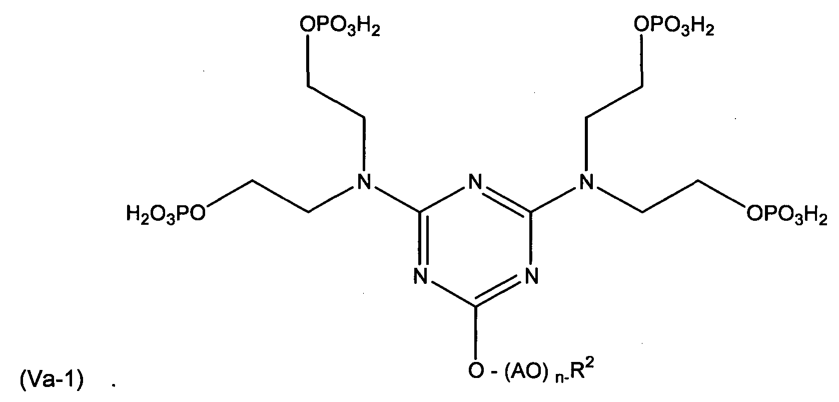

15. Baustoffmischung enthaltend eines oder mehrere Dispergiermittel gemäß einem der Ansprüche 1 bis 10 und eines oder mehrere anorganische Bindemittel ausgewählt aus der Gruppe α -Calciumsulfat-Hemihydrat, β -Calciumsulfat-Hemihydrat, Calciumsulfat in Form von Anhydrit, Hüttensand, Flugasche, silica fume, Hochofenschlacke, natürliche Puzzolane und/oder gebrannter Ölschiefer, bevorzugt ist (Port)landzement mit einem Anteil größer 40 Gewichtsprozent bezogen auf die Gesamtmenge des anorganischen Bindemittels im anorganischen Bindemittel enthalten.

16. Verwendung der Dispergiermittel gemäß einem der Ansprüche 1 bis 10 als Wasserreduktionsmittel für wasserhaltige anorganische Bindemittel, welche ausgewählt sind aus der Gruppe α -Calciumsulfat-Hemihydrat, β -Calciumsulfat-Hemihydrat, Calciumsulfat in Form von Anhydrit, Hüttensand, Flugasche, silica fume, Hochofenschlacke, natürliche Puzzolane und/oder gebrannter Ölschiefer, bevorzugt ist (Port)landzement mit einem Anteil größer 40 Gewichtsprozent bezogen auf die Gesamtmenge des anorganischen Bindemittels im anorganischen Bindemittel enthalten, besonders bevorzugt für Beton, insbesondere bevorzugt für Fertigteilwerkbeton.

17. Verwendung der Dispergiermittel gemäß einem der Ansprüche 1 bis 10 als Mittel zur Verringerung der Viskosität wasserhaltiger anorganischer Bindemittel, welche ausgewählt sind aus der Gruppe α -Calciumsulfat-Hemihydrat, β -Calciumsulfat-Hemihydrat, Calciumsulfat in Form von Anhydrit, Hüttensand, Flugasche, silica fume, Hochofenschlacke, natürliche Puzzolane und/oder gebrannter Ölschiefer, bevorzugt ist (Port)landzement mit einem Anteil größer 40 Gewichtsprozent bezogen auf die Gesamtmenge des anorganischen Bindemittels im anorganischen Bindemittel enthalten.

18. Verwendung der Dispergiermittel gemäß einem der Ansprüche 1 bis 10 zur Steigerung der Frühfestigkeiten wasserhaltiger anorganischer Bindemittel, welche ausgewählt sind aus der Gruppe α -Calciumsulfat-Hemihydrat, β -Calciumsulfat-Hemihydrat, Calciumsulfat in Form von Anhydrit, Hüttensand, Flugasche, silica fume, Hochofenschlacke, natürliche Puzzolane und/oder gebrannter Ölschiefer, bevorzugt ist (Port)landzement mit einem Anteil größer 40 Gewichtsprozent bezogen auf die Gesamtmenge des anorganischen Bindemittels im anorganischen Bindemittel enthalten.

19. Verwendung der Dispergiermittel gemäß einem der Ansprüche 1 bis 10 als Mahlhilfsmittel bei der Herstellung von Zement.

## Claims

1. Dispersant for inorganic particles, preferably for inorganic binders, more preferably for hydraulic binders, said dispersant comprising the following structural units
i) at least one triazine structural unit, preferably at least one 1,3,5-triazine structural unit, the case of more than one triazine structural unit being referred to as case A and the case of one triazine structural unit being referred to as case B, and in case A preferably 2 to 6, more preferably 2 to 4 and especially preferably 2 triazine structural units being present,
ii) at least one polyalkylene glycol structural unit, preferably one to 4 and more preferably one or two polyalkylene glycol structural units, especially preferably one polyalkylene glycol structural unit,
iii) and at least two phosphoric ester structural units, preferably 2 to 10, more preferably 2 to 6 and especially preferably 2 to 4 phosphoric ester structural units being present, **characterized in that**, in case A, at least one of the triazine structural units on at least one carbon atom of one or more aromatic triazine rings, preferably on one or two carbon atoms of one or more aromatic triazine rings, is independently substituted by a substituent selected from the general formulae (IIa) and/or (IIb), or,
in case B, the triazine structural unit on at least one carbon atom of the aromatic triazine ring, preferably on one or two of the carbon atoms of the aromatic triazine ring, is independently substituted by a substituent selected from the general formulae (IIa) and/or (IIb), where, in cases A and B, the general formulae in each case are
(IIa) -N-(CH₂CH₂-O-PO₃H₂)₂
and
(IIb) -NH-CH₂CH₂-O-PO₃H₂.

2. Dispersant according to Claim 1, **characterized in that**, in case A, at least one of the triazine structural units is substituted on at least one carbon atom of one or more aromatic triazine rings, preferably on one or two of the carbon atoms of one or more aromatic triazine rings, independently by a substituent selected from -N-R(-R¹), -S-R and/or -O-R, or,
in case B, the triazine structural unit is substituted on at least one carbon atom of the aromatic triazine ring, preferably on one or two of the carbon atoms of the aromatic triazine ring, independently by a substituent selected from N-R(-R¹), -S-R and/or -O-R, where, in both case A and in case B, R in each case is the same or different and is independently defined as a radical comprising at least one polyalkylene glycol structural unit, and where R¹ is the same or different and is independently defined as H, C₁- to C₂₀-alkyl radical or a structural unit comprising a polyalkylene glycol structural unit, preferably H.

3. Dispersant according to Claim 2, **characterized in that** the substituent(s) on the triazine structural unit(s) is/are -O-R where R is the same or different and is independently defined as a radical comprising at least one polyalkylene glycol structural unit.

4. Dispersant according to any of Claims 1 to 3, **characterized in that** at least one radical which comprises a polyalkylene glycol structural unit and is of general formula
(I) -(AO)ₙ-R²
is present in the dispersant,
where A is an alkylene having 2 to 18 carbon atoms, at least 60 mol% of A preferably being an alkylene having 2 carbon atoms, especially preferably at least 80 mol% being an alkylene having 2 carbon atoms, where the figures in mol% are each based on the total number of moles of all structural units (AO)ₙ in the dispersant,
n is an integer from 2 to 500, preferably 5 to 300, more preferably 15 to 200, especially preferably 20 to 80,
R² is the same or different and is independently H and/or a hydrocarbyl radical.

5. Dispersant according to any of Claims 1 to 4, **characterized in that** the weight ratio of the triazine structural unit(s) i) to the phosphoric ester structural units iii) in the dispersant is between 1/4.5 and 1/12, preferably between 1/5 and 1/10, especially preferably between 1/6 and 1/9.5.

6. Case A dispersant according to any of Claims 1 to 5, **characterized in that** one or more structural unit(s) which connect at least two triazine structural units and are of the general formula (IIIa) and/or (IIIb) is/are present and the general formulae of the structural units (IIIa) and (IIIb) are
(IIIa) Q-(T-triazine)ₖ
where
k is an integer greater than 1, preferably 2 to 6, especially preferably 2 or 3,
T is O, -N-H or S and
Q is any hydrocarbyl radical, preferably an alkylene radical, more preferably an alkylene radical having 2 to 20 carbon atoms, Q especially preferably being an ethylene radical, and T is -N-H- or O,
(IIIb) (triazine)-U-[(CH₂)₂-N(V)-]ₘ - (CH₂)₂-U-(-triazine),
where
m is an integer from 1 to 6, m preferably being an integer from 1 to 3,
U is the same or different and is independently O, S and/or -N-H, U preferably being -N-H,
V is H and/or triazine.

7. Case A dispersant according to any of Claims 1 to 6, **characterized in that** the dispersant contains at least one phosphoric diester structural unit, the phosphoric diester structural unit preferably corresponding to the general formula (IV)
(IV) -O-PO(OH)-O-,
the dispersant more preferably containing a structure which connects at least two triazine structural units, preferably 1,3,5-triazine structural units, and is of the general formula (IVa)
(IVa) (triazine)-N(W)-(CH₂)₂-O-PO(OH)-O-(CH₂)₂-N(W)-(triazine),
where W is independently -CH₂CH₂-O-PO₃H₂ and/or H.

8. Case A dispersant according to any of Claims 1 to 7, **characterized in that** two triazine structural units are present, one or two polyalkylene glycol structural units are present and 3 to 6 phosphoric ester structural units are present.

9. Case B dispersant according to any of Claims 1 to 5 where only one triazine structural unit is present, **characterized in that** one or two polyalkylene glycol structural units and two to four phosphoric ester structural units are present, preferably two to four phosphoric ester structural units in the presence of one polyalkylene glycol structural unit, more preferably two phosphoric ester structural units in the presence of two polyalkylene glycol structural units.

10. Case B dispersant according to Claim 9, **characterized in that** the dispersant corresponds to the structure (Va) or (Vb), where (Va) is 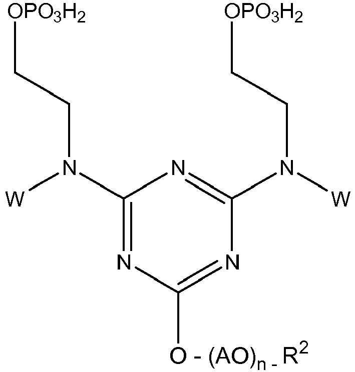 and
(Vb) is 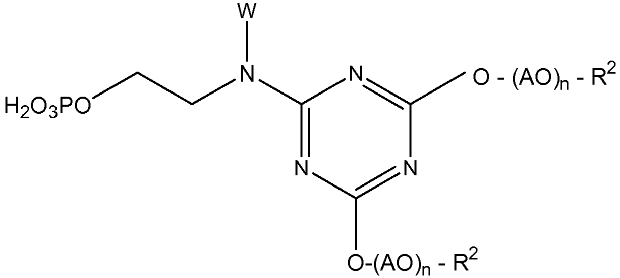 where R² in each of the general formulae (Va) and (Vb) is the same or different and is independently H and/or a hydrocarbyl radical, and W in formula (Va) is independently -CH₂CH₂-O-PO₃H₂ and/or H, and W in formula (Vb) is -CH₂CH₂-O-PO₃H₂.

11. Process for preparing dispersants for inorganic particles according to any of Claims 1 to 10, **characterized in that**
1.) the following reactants are used:
a) one or more trihalotriazines, preferably 2,4,6-trihalo-1,3,5-triazine, especially preferably 2,4,6-trichloro-1,3,5-triazine,
b) one or more compounds which comprise at least one polyalkylene glycol unit and react with the halogen substituents of the trihalotriazine, preferably a nucleophilic compound, the compound more preferably comprising only one nucleophilic radical reactive with the halogen substituents of the trihalotriazine,
c-1) one or more compound(s) each independently selected from primary and/or secondary amino alcohols, preferably selected from primary and/or secondary alkanolamines, more preferably from primary and/or secondary alkanolamines having more than one hydroxyl function and only one primary or secondary amino function, especially preferably diethanolamine,
and
c-2) at least one phosphating agent, preferably a phosphating agent for phosphation of hydroxyl functions, more preferably a phosphating agent selected from phosphoric acid, phosphorus pentoxide, phosphorus pentachloride, POCl₃ and/or polyphosphoric acid, preference being given to polyphosphoric acid,
or alternatively
2.) the reactants a) and b) are used, and independently one or more primary and/or secondary amino alcohol(s) C) phosphated on the hydroxyl function(s), preferably phosphated primary and/or secondary alkanolamine(s), more preferably phosphated primary and/or secondary alkanolamines having more than one phosphated hydroxyl function and only one primary or secondary amino function, especially preferably diphosphated and/or monophosphated diethanolamine, are used.

12. Process according to Claim 11, **characterized in that**, in the case of process alternative 1.), in a first reaction stage α-1),
reactant a) is reacted with reactants b) and c-1), preferably under alkaline pH conditions, more preferably at a pH greater than 9,
and, in a second reaction stage β-1),
the product obtained from the first reaction stage α-1) is phosphated with a phosphating agent c-2) or **in that**, alternatively in process alternative 2.), reactant a) is reacted with reactants b) and C) under alkaline pH conditions, preferably at a pH less than 9.

13. Process according to Claim 12, **characterized in that**, in process case 1.), the first reaction stage α-1) is conducted by reacting reactant a) with b) and then c-1) under alkaline conditions, preferably at a pH greater than 9.

14. Process according to any of Claims 11 to 13 for preparation of case B) dispersants with only one 1,3,5-triazine structural unit according to the general structural formula Va-1, **characterized in that**, in process 1.), in a first reaction stage α-1), as a), a 2,4,6-trihalo-1,3,5-triazine is reacted with b) a polyalkylene glycol alcohol, preferably a methyl polyethylene glycol, and c-1) diethanolamine, and, in the second reaction stage β-1), the reaction product obtained from the first reaction stage α-1) is phosphated, or alternatively, in case 2.), a) a 2,4,6-trihalo-1,3,5-triazine is reacted with b) a polyalkylene glycol alcohol, preferably a methyl polyethylene glycol, and C) diphosphated diethanol, where the general structural formula Va-1 corresponds to

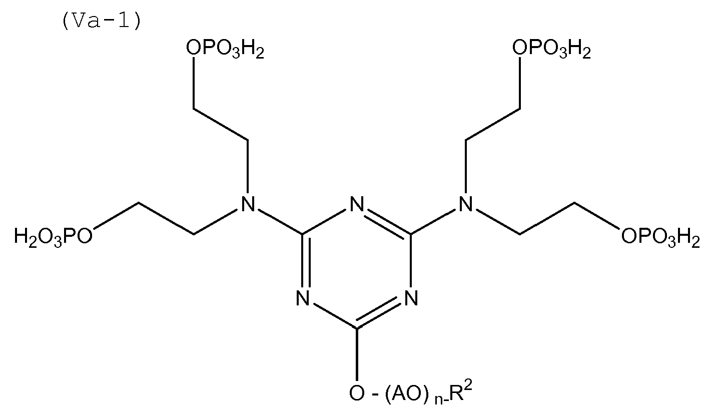

15. Building material mixture comprising one or more dispersants according to any of Claims 1 to 10 and one or more inorganic binders selected from the group of α-calcium sulfate hemihydrate, β-calcium sulfate hemihydrate, calcium sulfate in the form of anhydrite, slag sand, fly ash, fumed silica, blast furnace slag, natural pozzolans and/or burnt oil shale, preference being given to the presence of (portland) cement with a proportion greater than 40% by weight based on the total amount of the inorganic binder in the inorganic binder.

16. Use of the dispersants according to any of Claims 1 to 10 as water reducing agents of aqueous inorganic binders, selected from the group of α-calcium sulfate hemihydrate, β-calcium sulfate hemihydrate, calcium sulfate in the form of anhydrite, slag sand, fly ash, fumed silica, blast furnace slag, natural pozzolans and/or burnt oil shale, preference being given to the presence of (portland) cement with a proportion greater than 40% by weight based on the total amount of the inorganic binder in the inorganic binder, more preferably for concrete, especially preferably for concrete for precast component works.

17. Use of the dispersants according to any of Claims 1 to 10 as a means for reducing the viscosity of aqueous inorganic binders selected from the group of α-calcium sulfate hemihydrate, β-calcium sulfate hemihydrate, calcium sulfate in the form of anhydrite, slag sand, fly ash, fumed silica, blast furnace slag, natural pozzolans and/or burnt oil shale, preference being given to the presence of (portland) cement with a proportion of greater than 40% by weight based on the total amount of the inorganic binder in the inorganic binder.

18. Use of the dispersants according to any of Claims 1 to 10 for enhancing the early strengths of aqueous inorganic binders selected from the group of α-calcium sulfate hemihydrate, β-calcium sulfate hemihydrate, calcium sulfate in the form of anhydrite, slag sand, fly ash, fumed silica, blast furnace slag, natural pozzolans and/or burnt oil shale, preference being given to the presence of (portland) cement with a proportion of greater than 40% by weight based on the total amount of the inorganic binder in the inorganic binder.

19. Use of the dispersants according to any of Claims 1 to 10 as a grinding aid in the production of cement.

## Revendications

1. Agent dispersant pour particules inorganiques, de préférence pour liants inorganiques, de manière particulièrement préférée pour liants hydrauliques, qui contient les unités structurales suivantes :
i) au moins une unité structurale triazine, de préférence au moins une unité structurale 1,3,5-triazine, le cas de plusieurs unités structurales triazine étant désigné comme le cas A et le cas d'une unité structurale triazine comme le cas B, dans le cas A, de préférence 2 à 6, de manière particulièrement préférée 2 à 4 et de manière notamment préférée 2 unités structurales triazine étant contenues,
ii) au moins une unité structurale polyalkylène glycol, de préférence une à 4, de manière particulièrement préférée une ou deux unités structurales polyalkylène glycol, de manière notamment préférée une unité structurale polyalkylène glycol,
iii) et au moins deux unités structurales ester d'acide phosphorique, de préférence 2 à 10, de manière particulièrement préférée 2 à 6 et de manière notamment préférée 2 à 4 unités structurales ester d'acide phosphorique étant contenues, **caractérisé en ce que**, dans le cas A, au moins une des unités structurales triazine est substituée sur au moins un atome de carbone d'un ou de plusieurs cycles triazine aromatiques, de préférence sur un ou deux des atomes de carbone d'un ou de plusieurs cycles triazine aromatiques, indépendamment les uns des autres, avec un substituant choisi parmi les formules générales (IIa) et/ou (IIb), ou
dans le cas B, l'unité structurale triazine est substituée sur au moins un atome de carbone du cycle triazine aromatique, de préférence sur un ou deux des atomes de carbone du cycle triazine aromatique, indépendamment les uns des autres, avec un substituant choisi parmi les formules générales (IIa) et/ou (IIb), dans les cas A et B, les formules générales étant respectivement :
(IIa) -N-(CH₂CH₂-O-PO₃H₂)₂
et
(IIb) -NH-CH₂CH₂-O-PO₃H₂.

2. Agent dispersant selon la revendication 1, **caractérisé en ce que**, dans le cas A, au moins une des unités structurales triazine est substituée sur au moins un atome de carbone d'un ou de plusieurs cycles triazine aromatique, de préférence sur un ou deux des atomes de carbone d'un ou de plusieurs cycles triazine aromatiques, indépendamment les uns des autres, avec un substituant choisi parmi -N-R(-R¹), -S-R et/ou -O-R, ou
dans le cas B, l'unité structurale triazine est substituée sur au moins un atome de carbone du cycle triazine aromatique, de préférence sur un ou deux des atomes de carbone du cycle triazine aromatique, indépendamment les uns des autres, avec un substituant choisi parmi N-R(-R¹), -S-R et/ou -O-R, dans le cas A tout comme dans le cas B, les R étant à chaque fois identiques ou différents, et étant définis indépendamment les uns des autres comme un radical comprenant au moins une unité structurale polyalkylène glycol, et les R¹ étant identiques ou différents, et étant définis indépendamment les uns des autres comme H, un radical alkyle en C₁ à C₂₀ ou une unité structurale comprenant une unité structurale polyalkylène glycol, de préférence H.

3. Agent dispersant selon la revendication 2, **caractérisé en ce que** le substituant sur l'unité structurale triazine ou les substituants sur les unités structurales triazine est ou sont -O-R, les R étant identiques ou différents, et étant définis indépendamment les uns des autres comme un radical comprenant au moins une unité structurale polyalkylène glycol.

4. Agent dispersant selon l'une quelconque des revendications 1 à 3, **caractérisé en ce qu'**au moins un radical comprenant une unité structurale polyalkylène glycol de formule générale
(I) -(AO)ₙ-R²
est contenu dans l'agent dispersant,
A étant un alkylène de 2 à 18 atomes de carbone, A étant de préférence à hauteur d'au moins 60 % en moles un alkylène à 2 atomes de carbone, de manière particulièrement préférée à hauteur d'au moins 80 % en moles un alkylène à 2 atomes de carbone, les données en % en moles se rapportant à chaque fois au nombre de moles total de toutes les unités structurales (AO)ₙ dans l'agent dispersant,
n étant un nombre entier de 2 à 500, de préférence de 5 à 300, de manière particulièrement préférée de 15 à 200, de manière notamment préférée de 20 à 80,
les R² étant identiques ou différents, et représentant indépendamment les uns des autres H et/ou un radical hydrocarboné.

5. Agent dispersant selon l'une quelconque des revendications 1 à 4, **caractérisé en ce que** le rapport en poids entre la ou les unités structurales triazine i) et les unités structurales ester d'acide phosphorique iii) dans l'agent dispersant est compris entre 1/4,5 et 1/12, de préférence entre 1/5 et 1/10, de manière particulièrement préférée entre 1/6 et 1/9,5.

6. Agent dispersant du cas A selon l'une quelconque des revendications 1 à 5, **caractérisé en ce qu'**une ou plusieurs unités structurales de formule générale (IIIa) et/ou (IIIb) reliant au moins deux unités structurales triazine est ou sont contenues et les formules générales des unités structurales (IIIa) et (IIIb) sont :
(IIIa) Q-(T-triazine)ₖ,
dans laquelle
k est un nombre entier supérieur à 1, de préférence de 2 à 6, de manière particulièrement préférée 2 ou 3,
T représente O, -N-H ou S, et
Q représente un radical hydrocarboné quelconque, de préférence un radical alkylène, de manière particulièrement préférée un radical alkylène de 2 à 20 atomes de carbone, Q étant de manière notamment préférée un radical éthylène et T représentant -N-H- ou O,
(IIIb) (triazine)-U-[(CH₂)₂-N(V)-]ₘ-(CH₂)₂-U-(-triazine),
dans laquelle
m est un nombre entier de 1 à 6, m étant de préférence un nombre entier de 1 à 3,
les U sont identiques ou différents, et représentent indépendamment les uns des autres O, S et/ou -N-H, U représentant de préférence -N-H,
V représente H et/ou triazine.

7. Agent dispersant du cas A selon l'une quelconque des revendications 1 à 6, **caractérisé en ce qu'**au moins une unité structurale diester d'acide phosphorique est contenue dans l'agent dispersant, l'unité structurale diester d'acide phosphorique correspondant de préférence à la formule générale (IV)
(IV) -O-PO(OH)-O-
une structure de formule générale (IVa) reliant au moins deux unités structurales triazine, de préférence des unités structurales 1,3,5-triazine, étant de manière particulièrement préférée contenue dans l'agent dispersant,
(IVa) (triazine)-N(W)-(CH₂)₂-O-PO(OH)-O-(CH₂)₂-N(W)-(triazine),
les W représentant indépendamment les uns des autres-CH₂CH₂-O-PO₃H₂ et/ou H.

8. Agent dispersant du cas A selon l'une quelconque des revendications 1 à 7, **caractérisé en ce que** deux unités structurales triazine sont contenues, une ou deux unités structurales polyalkylène glycol sont contenues et 3 à 6 unités structurales ester d'acide phosphorique sont contenues.

9. Agent dispersant du cas B selon l'une quelconque des revendications 1 à 5, dans lequel seule une unité structurale triazine est contenue, **caractérisé en ce qu'**une ou deux unités structurales polyalkylène glycol et deux à quatre unités structurales ester d'acide phosphorique sont contenues, deux à quatre unités structurales ester d'acide phosphorique étant de préférence présentes en présence d'une unité structurale polyalkylène glycol, deux unités structurales ester d'acide phosphorique étant de manière particulièrement préférée présentes en présence de deux unités structurales polyalkylène glycol.

10. Agent dispersant du cas B selon la revendication 9, **caractérisé en ce que** l'agent dispersant correspond à la structure (Va) ou (Vb),
(Va) étant 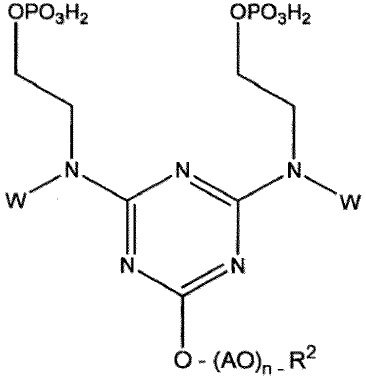 et
(Vb) étant 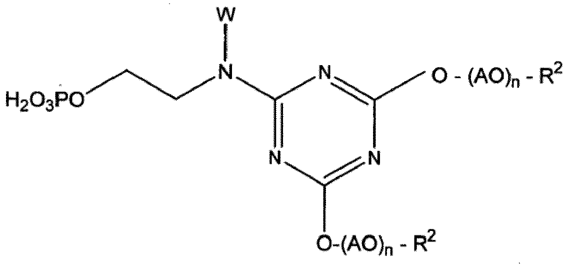 les R² dans les formules générales (Va) et (Vb) étant à chaque fois identiques ou différents, et représentant indépendamment les uns des autres H et/ou un radical hydrocarboné, et les W dans la formule (Va) représentant indépendamment les uns des autres -CH₂CH₂-O-PO₃H₂ et/ou H, et W dans la formule (Vb) représentant -CH₂CH₂-O-PO₃H₂.

11. Procédé de fabrication d'agents dispersants pour particules inorganiques selon l'une quelconque des revendications 1 à 10, **caractérisé en ce que**
1.) les réactifs suivants sont utilisés :
a) une ou plusieurs trihalogénotriazines, de préférence une 2,4,6-trihalogéno-1,3,5-triazine, de manière particulièrement préférée la 2,4,6-trichloro-1,3,5-triazine,
b) un ou plusieurs composés comprenant au moins une unité polyalkylène glycol, réagissant avec les substituants halogène de la trihalogénotriazine, de préférence un composé nucléophile, le composé comprenant de manière particulièrement préférée uniquement un radical nucléophile réactif avec les substituants halogène de la trihalogénotriazine,
c-1) un ou plusieurs composés choisis indépendamment les uns des autres parmi les aminoalcools primaires et/ou secondaires, de préférence choisis parmi les alcanolamines primaires et/ou secondaires, de manière particulièrement préférée parmi les alcanolamines primaires et/ou secondaires qui comprennent plus d'une fonction hydroxy et uniquement une fonction amino primaire ou secondaire, de manière notamment préférée la diéthanolamine,
et
c-2) au moins un agent de phosphatation, de préférence un agent de phosphatation pour la phosphatation de fonctions hydroxy, de manière particulièrement préférée un agent de phosphatation choisi parmi l'acide phosphorique, le pentoxyde de phosphore, le pentachlorure de phosphore, POCl₃ et/ou l'acide polyphosphorique, de préférence l'acide polyphosphorique,
ou en variante
2.) les réactifs a) et b) sont utilisés et, indépendamment les uns des autres, un ou plusieurs aminoalcools primaires et/ou secondaires, phosphatés sur la ou les fonctions hydroxy C), de préférence une ou plusieurs alcanolamines primaires et/ou secondaires phosphatées, de manière particulièrement préférée une ou plusieurs alcanolamines primaires et/ou secondaires phosphatées qui comprennent plus d'une fonction hydroxy phosphatée et uniquement une fonction amino primaire ou secondaire, de manière notamment préférée la diéthanolamine diphosphatée et/ou monophosphatée, sont utilisés.

12. Procédé selon la revendication 11, **caractérisé en ce que**, selon la variante de procédé 1.), lors d'une première étape de réaction α-1),
le réactif a) est mis en réaction avec les réactifs b) et c-1), de préférence dans des conditions de pH alcalines, de manière particulièrement préférée à un pH supérieur à 9,
et lors d'une deuxième étape de réaction β-1),
le produit obtenu à partir de la première étape de réaction α-1) est phosphaté avec un agent de phosphatation c-2) ou, en variante, selon la variante de procédé 2.), le réactif a) est mis en réaction avec les réactifs b) et C) dans des conditions de pH alcalines, de préférence à un pH inférieur à 9.

13. Procédé selon la revendication 12, **caractérisé en ce que**, dans le cas de procédé 1.), la première étape de réaction α-1) est réalisée par réaction du réactif a) avec b), puis c-1) dans des conditions alcalines, de préférence à un pH supérieur à 9.

14. Procédé selon l'une quelconque des revendications 11 à 13 pour la fabrication d'agents dispersants du cas B) contenant uniquement une unité structurale 1,3,5-triazine selon la formule structurale générale Va-1, **caractérisé en ce que**, selon le procédé 1.), lors d'une première étape de réaction α-1), en tant que a) une 2,4,6-trihalogéno-1,3,5-triazine est mise en réaction avec b) un polyalkylène glycol-alcool, de préférence un méthylpolyéthylène glycol, et c-1) de la diéthanolamine, et lors de la deuxième étape de réaction β-1), le produit de réaction obtenu à partir de la première étape de réaction α-1) est phosphaté ou, en variante, selon le cas 2.), a) une 2,4,6-trihalogéno-1,3,5-triazine est mise en réaction avec b) un polyalkylène glycol-alcool, de préférence un méthylpolyéthylène glycol, et C) du diéthanol diphosphaté, la formule structurale générale Va-1 correspondant à

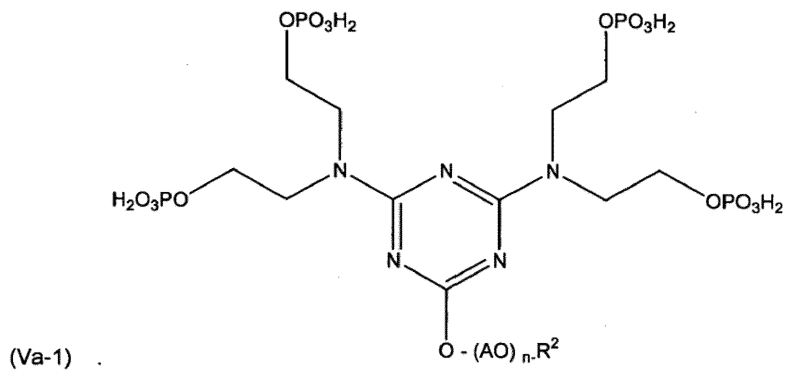

15. Mélange de matériau de construction contenant un ou plusieurs agents dispersants selon l'une quelconque des revendications 1 à 10 et un ou plusieurs liants inorganiques choisis dans le groupe constitué par l'hémihydrate de sulfate de calcium α, l'hémihydrate de sulfate de calcium β, le sulfate de calcium sous la forme d'anhydrite, le laitier granulé, les cendres volantes, la fumée de silice, le laitier de haut fourneau, les pouzzolanes naturels et/ou le schiste bitumineux brûlé, du ciment (Portland) étant de préférence contenu en une proportion supérieure à 40 pour cent en poids par rapport à la quantité totale du liant inorganique dans le liant inorganique.

16. Utilisation des agents dispersants selon l'une quelconque des revendications 1 à 10 en tant qu'agent de réduction de l'eau pour des liants inorganiques contenant de l'eau, qui sont choisis dans le groupe constitué par l'hémihydrate de sulfate de calcium α, l'hémihydrate de sulfate de calcium β, le sulfate de calcium sous la forme d'anhydrite, le laitier granulé, les cendres volantes, la fumée de silice, le laitier de haut fourneau, les pouzzolanes naturels et/ou le schiste bitumineux brûlé, du ciment (Portland) étant de préférence contenu en une proportion supérieure à 40 pour cent en poids par rapport à la quantité totale du liant inorganique dans le liant inorganique, de manière particulièrement préférée pour du béton, de manière notamment préférée pour du béton pour usine de préfabrication.

17. Utilisation des agents dispersants selon l'une quelconque des revendications 1 à 10 en tant qu'agent de réduction de la viscosité de liants inorganiques contenant de l'eau, qui sont choisis dans le groupe constitué par l'hémihydrate de sulfate de calcium α, l'hémihydrate de sulfate de calcium β, le sulfate de calcium sous la forme d'anhydrite, le laitier granulé, les cendres volantes, la fumée de silice, le laitier de haut fourneau, les pouzzolanes naturels et/ou le schiste bitumineux brûlé, du ciment (Portland) étant de préférence contenu en une proportion supérieure à 40 pour cent en poids par rapport à la quantité totale du liant inorganique dans le liant inorganique.

18. Utilisation des agents dispersants selon l'une quelconque des revendications 1 à 10 pour l'augmentation de la résistance initiale de liants inorganiques contenant de l'eau, qui sont choisis dans le groupe constitué par l'hémihydrate de sulfate de calcium α, l'hémihydrate de sulfate de calcium β, le sulfate de calcium sous la forme d'anhydrite, le laitier granulé, les cendres volantes, la fumée de silice, le laitier de haut fourneau, les pouzzolanes naturels et/ou le schiste bitumineux brûlé, du ciment (Portland) étant de préférence contenu en une proportion supérieure à 40 pour cent en poids par rapport à la quantité totale du liant inorganique dans le liant inorganique.

19. Utilisation des agents dispersants selon l'une quelconque des revendications 1 à 10 en tant qu'adjuvant de broyage lors de la fabrication de ciment.
